# EUROPÄISCHE PATENTANMELDUNG

(11) **EP 4 322 022 A1**
(43) Veröffentlichungstag der Anmeldung: **14.02.2024**
(21) Anmeldenummer: 22189390.2
(22) Anmeldetag: 09.08.2022
(51) Int. Cl.: G06F 16/25

(54) **VERFAHREN UND SYSTEM ZUR BEREITSTELLUNG VON ZUMINDEST TEILWEISE STRUKTURIERTEN DATEN AN EINE APPLIKATION**

(71) Anmelder: One Data GmbH, 94032 Passau (DE)
(72) Erfinder: Dr.BÔHM Andreas; c/o ONE LOGIC GmbH, 94032 Passau (DE); Dr WERNICKE Sebastian; c/o ONE LOGIC GmbH, 94032 Passau (DE)
(74) Vertreter: Wolf, Gerhard

(57) **Zusammenfassung**

Die Erfindung betrifft ein computerimplementiertes Verfahren und ein System zur Bereitstellung von zumindest teilweise strukturierten Daten an eine Applikation.

## Beschreibung

Die Erfindung betrifft ein computerimplementiertes Verfahren und ein System zur Bereitstellung oder Zuführung von zumindest teilweise strukturierten Daten an eine die Daten verarbeitende Applikation, insbesondere eine mit Daten einer Datenbank zusammenwirkenden Applikation (Datenbank-Applikation).

Datenbankapplikationen benötigen Eingangsdaten in einem definierten Format und in einer hinreichend hohen Datenqualität, um in der gewünschten Weise zu funktionieren bzw. Ergebnisse in einer vordefinierten Qualität zu liefern. Wenn einer Applikation Daten in einem falschen Format zugeführt werden, funktioniert beispielsweise die Applikation nicht. Für den Fall, dass Daten in dem geforderten Datenformat zugeführt werden, jedoch die Datenqualität nicht ausreicht, wird die Applikation fehlerhafte Ergebnisse liefern, beispielsweise eine irreführende Prognose oder einen ungenauen Finanzreport, was bei kurzfristig auftretenden Datenveränderungen häufig längere Zeit unbemerkt bleibt.

Die Anforderungen an das Datenformat und die Datenqualität sind applikationsabhängig, d.h. unterscheiden sich, je nachdem welche Applikation mit Daten versorgt werden soll.

Die Datenanforderungen können in Anforderungen hinsichtlich des Datenmodells und der Datenqualität unterschieden werden.

Das Datenmodell definiert einzelne, von der Applikation erwartete Datenelemente basierend auf deren Datentyp, Datenformat, deren Integration in die Tabellenstruktur der Datenquellen und/oder deren Beziehungen zueinander. Die Datenqualität bezieht sich auf den Inhalt der Daten, die im Datenmodell spezifiziert sind. Die Datenqualität kann durch Spezifikationen hinsichtlich Datengenauigkeit, Datenvollständigkeit, Datenkonformität, Verlässlichkeit der Daten und/oder zeitlicher Verfügbarkeit der Daten definiert sein.

Bislang werden beim Einrichten der Applikation die von der Applikation benötigten Daten durch Fachpersonal in den Datenquellen gesucht und hinsichtlich der Anforderungen an Datenformat, Datentyp etc. geprüft, um anschließend festzulegen, woher die Daten, die für die Applikation erforderlich sind, bezogen werden sollen. Im Falle einer Abweichung zwischen geforderten und verfügbaren Daten wird durch den Nutzer eine Datenanpassung bzw. Datentransformation vorgenommen. Die Prüfung der Daten hinsichtlich Datenqualität erfolgt bislang entweder durch die Applikation selbst, wenn dies durch den Programmierer vorgesehen wurde, oder es erfolgt durch stichpunktartig durch Fachpersonal. Damit kann es vorkommen, dass zeitliche Veränderungen der Datenqualität längere Zeit unbemerkt bleiben.

Ausgehend hiervon ist es Aufgabe der Erfindung, ein Verfahren zur Bereitstellung von zumindest teilweise strukturierten Daten an eine Applikation anzugeben, das eine automatisierte, hinsichtlich vorgegebener Datenkriterien standardisierte und flexible Zuführung von Daten zu einer Applikation ermöglicht.

Die Aufgabe wird durch ein Verfahren mit den Merkmalen des unabhängigen Patentanspruchs 1 gelöst. Bevorzugte Ausführungsformen sind Gegenstand der Unteransprüche. Ein Computerprogramm, das einen Programmcode zur Durchführung des Verfahrens zur Bereitstellung von zumindest teilweise strukturierten Daten an eine Applikation enthält, ist Gegenstand des nebengeordneten Patentanspruchs 14 und ein Datenkopplungssystem zur Bereitstellung von zumindest teilweise strukturierten Daten an eine Applikation ist Gegenstand des weiteren nebengeordneten Patentanspruchs 15.

Gemäß einem ersten Aspekt bezieht sich die Erfindung auf ein computerimplementiertes Verfahren zur Bereitstellung von zumindest teilweise strukturierten Daten an eine Applikation mittels eines Datenkopplungssystems. Das Datenkopplungssystem umfasst eine Datenschnittstelle, eine Datenkopplungseinheit und eine Applikationsschnittstelle. Die Datenschnittstelle empfängt die Daten von zumindest einer Datenquelle. Die Applikationsschnittstelle bildet eine Schnittstelle zur Bereitstellung von Daten zu der Applikation. Das Datenkopplungssystem ist als universell einsetzbares System dazu eingerichtet, zeitgleich oder zeitversetzt mehreren unterschiedlichen Applikationen Daten bereitzustellen. Insbesondere ist das Datenkopplungssystem für die jeweilige Applikation konfigurierbar. Das Verfahren umfasst die folgenden Schritte:
Zunächst werden applikationsspezifische Datenspezifikationen und applikationsspezifische Datenvalidierungsspezifikationen bereitgestellt. Dies erfolgt vorzugsweise durch die Applikationsschnittstelle. Die Datenspezifikationen enthalten beispielsweise Kriterien hinsichtlich einzelner Datenelemente, die für die Ausführung der Applikation benötigt werden. Die Datenvalidierungsspezifikationen enthalten beispielsweise Datenqualitätskriterien zu den einzelnen Datenelementen.

Es wird der Zugriff auf Daten der zumindest einen Datenquelle durch die Datenschnittstelle bereitgestellt. Insbesondere wird ein Datenzugriff derart bereitgestellt, dass die Datenkopplungseinheit die in der zumindest einen Datenquelle vorhandenen Daten sichten und damit automatisiert die Daten auffinden und laden kann, die die applikationsspezifischen Datenspezifikationen erfüllen.

Anschließend wird eine Datenanforderung durch das Datenkopplungssystem von der Applikation empfangen. Gemäß der Datenanforderung werden daraufhin von der Datenkopplungseinheit Daten aus der zumindest einen Datenquelle über die Datenschnittstelle empfangen.

Die empfangenen Daten werden geprüft, ob diese die Datenspezifikationen erfüllen. Sofern diese die Datenspezifikationen nicht erfüllen, werden diese durch die Datenkopplungseinheit in ein Datenmodell gemäß den Datenspezifikationen transformiert, wodurch spezifikationsgeprüfte Daten entstehen. Insbesondere kann das Format der empfangenen Daten derart geändert werden, dass dies dem in den Datenspezifikationen definierten Datenformat entspricht.

Anschließend werden die spezifikationsgeprüften Daten basierend auf den Datenvalidierungsspezifikationen validiert, wodurch validierte Daten entstehen. Die Datenvalidierungsspezifikationen enthalten beispielsweise Kriterien bezüglich der Datenqualität, wobei die spezifikationsgeprüften Daten hinsichtlich dieser Kriterien geprüft werden. Falls die spezifikationsgeprüften Daten den geforderten Datenvalidierungsspezifikationen nicht entsprechen, können die spezifikationsgeprüften Daten transformiert werden (beispielsweise durch Modifikation der Daten), um die Datenvalidierungsspezifikationen zu erfüllen. In diesem Fall werden die validierten Daten durch die transformierten Daten gebildet, die die Datenvalidierungsspezifikationen erfüllen.

Zuletzt werden die validierten Daten an die Applikation weitergeleitet. Die Applikation kann diese validierten Daten weiterverarbeiten.

Der technische Vorteil des Verfahrens besteht darin, dass der Applikation durch das Datenkopplungssystem automatisiert hinsichtlich vorgegebener Kriterien, beispielsweise Kriterien hinsichtlich Datenmodell und Datenqualität, geprüfte Daten zur Verfügung gestellt werden und damit in standardisierter Weise sichergestellt werden kann, dass der Applikation Daten gemäß eines vordefinierten Datenmodells und einer definierten Datenqualität zugeführt werden.

Gemäß einem Ausführungsbeispiel können die applikationsspezifischen Datenspezifikationen und die applikationsspezifischen Datenvalidierungsspezifikationen in einer Speichereinheit gespeichert sein, die von dem Datenkopplungssystem unabhängig ist und auf die das Datenkopplungssystem über eine Datenverbindung zugreifen kann. Dadurch ist es möglich, die applikationsspezifischen Datenspezifikationen und die applikationsspezifischen Datenvalidierungsspezifikationen zentral zu speichern, so dass das Datenkopplungssystem bei Verwendung mit einer bestimmten Applikation einen Satz von applikationsspezifischen Datenspezifikationen und applikationsspezifischen Datenvalidierungsspezifikationen von dieser Speichereinheit laden kann. Insbesondere kann das Datenkopplungssystem applikationsabhängig die jeweiligen Datenspezifikationen und Datenvalidierungsspezifikationen anwenden und ist damit universell mit unterschiedlichen Applikationen verwendbar. Alternativ können die applikationsspezifischen Datenspezifikationen und die applikationsspezifischen Datenvalidierungsspezifikationen auch in einer Speichereinheit des Datenkopplungssystems selbst gespeichert sein.

Gemäß einem Ausführungsbeispiel umfassen die applikationsspezifischen Datenspezifikationen eine Definition mehrerer Datensätze, die für die Ausführung der jeweiligen Applikation notwendig sind. Die applikationsspezifischen Datenspezifikationen geben damit an, welche Daten für die Ausführung der Applikation von den Datenquellen geladen werden müssen, um die Applikation ausführen zu können.

Gemäß einem Ausführungsbeispiel definieren die applikationsspezifischen Datenspezifikationen zumindest ein Datenmodell für die jeweilige Applikation, das Definitionen mehrerer Datensätze aufweist, wobei die Definition eines Datensatzes jeweils den Datentyp und das Datenformat zumindest eines Datenelements umfasst. Dadurch kann mittels der applikationsspezifischen Datenspezifikationen festgelegt werden, welchen Datentyp und welches Datenformat die von der Applikation zu verarbeitenden Datenelemente haben müssen, um verarbeitet werden zu können.

Gemäß einem Ausführungsbeispiel ist einem Datenformat eines Datenelements zumindest eine Datenformatalternative zugeordnet, wobei die Datenkopplungseinheit Daten, die die Datenspezifikationen nicht erfüllen, basierend auf der zumindest einen Datenformatalternative transformiert, um die Datenspezifikationen zu erfüllen. Beispielsweise kann die Datenkopplungseinheit dazu konfiguriert sein, zunächst Daten zu ermitteln, die die Datenspezifikationen erfüllen. Insbesondere kann die Datenkopplungseinheit dazu konfiguriert sein, zunächst ein Datenelement zu ermitteln, das hinsichtlich Datentyp, Datenformat und gegebenenfalls weiteren Kriterien mit den Datenspezifikationen übereinstimmt. Falls ein solches Datenelement nicht ermittelt werden kann, kann die Datenkopplungseinheit dazu konfiguriert sein, ein Datenelement zu ermitteln, das eine Formatalternative des in den Datenspezifikationen festgelegten Datenformats erfüllt. Dies bedeutet insbesondere, dass die Daten mit entsprechendem Inhalt verfügbar sind, nicht jedoch in dem geforderten Datenformat. Das in der Formatalternative vorliegende Datenelement kann anschließend mittels einer Datentransformation in das Datenformat gemäß den Datenspezifikationen umgewandelt werden. Anstelle der Transformation mittels einer zugeordneten Datenformatalternative kann bei Nichterfüllung der Datenspezifikationen eine automatische Suche nach einem alternativen Datenformat vollzogen werden.

Gemäß einem Ausführungsbeispiel wandelt die Datenkopplungseinheit bei einem Abweichen der empfangenen Daten von den applikationsspezifischen Datenspezifikationen die Daten basierend auf einer oder mehreren Transformationsfunktionen um. Die Transformationsfunktionen können beispielsweise dazu konfiguriert sein, ein Mapping der Daten von der Formatalternative in das gemäß Datenspezifikationen geforderte Datenformat zu vollziehen, wobei der Dateninhalt der Daten dabei erhalten bleibt. Alternativ kann mittels der Transformationsfunktionen beispielsweise eine Umwandlung des Datentyps vollzogen werden.

Gemäß einem Ausführungsbeispiel umfassen die applikationsspezifischen Datenvalidierungsspezifikationen mehrere applikationsspezifische Validierungsanforderungen, die Qualitätsanforderungen angeben, die von den Daten, die der jeweiligen Applikation zuzuführen sind, zu erfüllen sind. Die Validierungsanforderungen können beispielsweise die Werte oder Wertebereiche der Daten, Kriterien zu Datenaktualität, Datenvollständigkeit, Datenauthentizität und/oder Übertragungsgeschwindigkeit etc. sein. Basierend auf diesen Qualitätsanforderungen lässt sich prüfen, ob die Datenqualität hinreichend gut ist, damit die Applikation durch die Verarbeitung der Daten hinreichend gute Ergebnisse liefert.

Gemäß einem Ausführungsbeispiel ist die Datenkopplungseinheit in einem Initialisierungsmodus und nach dem Beenden des Initialisierungsmodus in einem Produktionsmodus betreibbar. In dem Initialisierungsmodus werden die Daten der zumindest einen Datenquelle, die über die Datenschnittstelle verfügbar sind und die den Datenspezifikationen entsprechen, automatisiert identifiziert. Insbesondere kann die Datenkopplungseinheit über die Datenschnittstelle direkten Zugriff auf die Daten der zumindest einen Datenquelle haben und damit Daten gemäß der Datenspezifikationen ermitteln.

Die automatisierte Identifikation von Daten kann beispielsweise durch ein maschinell lernendes Verfahren unterstützt sein. Das maschinell lernende Verfahren kann dazu konfiguriert sein, den Inhalt der Daten, die in einer Datenquelle, einer Datentabelle oder einer Datenspalte vorhanden sind, basierend auf der in der Vergangenheit vorgenommenen Nutzerauswahl von Daten und/oder Metadaten zu der Datenquelle, der Datentabelle oder der Datenspalte zu erlernen. Dadurch kann die automatisierte Identifikation von Daten verbessert werden.

Vorzugsweise ist das Datenkopplungssystem dazu konfiguriert, die automatisierte Identifikation von Daten basierend auf der Analyse der statistischen Verteilung der Datenwerte vorzunehmen. So kann beispielsweise die statistische Verteilung der Datenwerte in einer Spalte einer Datentabelle dazu verwendet werden, den Inhalt der in dieser Spalte gespeicherten Daten zu prognostizieren und damit geeignete Daten innerhalb einer Datenquelle zu finden.

Gemäß einem Ausführungsbeispiel ist die Datenkopplungseinheit in einem Initialisierungsmodus und nach dem Beenden des Initialisierungsmodus in einem Produktionsmodus betreibbar, wobei die Datenkopplungseinheit solange im Initialisierungsmodus verbleibt, bis sämtliche Daten, die gemäß den applikationsspezifischen Datenspezifikationen für das Betreiben der jeweiligen Applikation notwendig sind, ermittelt wurden und, falls diese Daten die Datenspezifikationen nicht erfüllen, mittels Datentransformation in ein gemäß den Datenspezifikationen geeignetes Datenformat transformiert wurden. Insbesondere können an einer Nutzerschnittstelle die in der zumindest einen Datenquelle verfügbaren Daten, die den Datenspezifikationen entsprechen, zur Anzeige gebracht werden, dass der Nutzer diese auswählen und zur Weiterleitung an die Applikation freigeben kann. Für den Fall, dass mehrere Datenelemente vorhanden sind, die den Datenspezifikationen entsprechen, kann der Nutzer eine Selektion eines Datenelement aus der Gruppe der mehreren datenspezifikationskonformen Daten vornehmen.

Gemäß einem Ausführungsbeispiel ist die Datenkopplungseinheit in einem Initialisierungsmodus und nach dem Beenden des Initialisierungsmodus in einem Produktionsmodus betreibbar ist, wobei die Datenkopplungseinheit im Initialisierungsmodus Vorschläge zur Datentransformation unterbreitet, mittels der Daten, die von der Datenschnittstelle bereitgestellt werden und die die Datenspezifikationen nicht erfüllen, hin zu Daten, die die Datenspezifikationen erfüllen, transformiert werden können. Insbesondere können an der Nutzerschnittstelle des Datenkopplungssystems eine oder mehrere Transformationsfunktionen als Transformationsvorschlag angezeigt werden. Der Nutzer kann an der Nutzerschnittstelle eine Transformationsfunktion auswählen, um die Datentransformation durchzuführen. Das Datenkopplungssystem kann einen Speicher für Transformationsfunktionen aufweisen oder dazu konfiguriert sein, auf Transformationsfunktionen in einer externen Speichereinheit zuzugreifen. Dadurch wird die Bereitstellung der für die Applikation erforderlichen Daten durch das Datenkopplungssystem wesentlich erleichtert.

Gemäß einem Ausführungsbeispiel prüft die Datenkopplungseinheit intermittierend oder kontinuierlich, ob die spezifikationsgeprüften Daten die Datenvalidierungsspezifikationen erfüllen und es wird eine Statusinformation erzeugt, wenn die spezifikationsgeprüften Daten die Datenvalidierungsspezifikationen nicht erfüllen. Dadurch kann der Nutzer über den aktuellen Status der verarbeiteten Daten informiert werden.

Gemäß einem Ausführungsbeispiel übermittelt die Datenkopplungseinheit Statusinformationen bezüglich der validierten Daten an die Applikation. Die Applikation gibt basierend auf den Statusinformationen eine Fehlermeldung aus oder vollzieht eine Fehlerbehandlung. Dadurch kann im Fehlerfall eine in der Applikation vorgesehene Alarmroutine ausgelöst werden. Alternativ oder zusätzlich kann basierend auf der Statusinformation eine Alarmmeldung an der Nutzerschnittstelle des Datenkopplungssystems ausgegeben werden, dass die von der Applikation verarbeiteten Daten die Datenvalidierungsspezifikationen nicht erfüllen.

Gemäß einem Ausführungsbeispiel ist die Datenkopplungseinheit in einem Initialisierungsmodus und nach dem Beenden des Initialisierungsmodus in einem Produktionsmodus betreibbar, wobei die Datenkopplungseinheit im Produktionsmodus mittels eines maschinell lernenden Verfahrens oder mittels eines Mustererkennungsverfahrens die von den Datenquellen über die Datenschnittstelle bereitgestellten Daten überwacht, wodurch ein die Veränderung der Daten über der Zeit definierender Wert oder Wertebereich erhalten wird und dass eine Meldung ausgegeben wird, wenn eine zeitliche Veränderung der Daten erfasst wird, die von dem Wert und/oder dem Wertebereich oder einem Schwellwert, der dem Wert oder Wertebereich zugeordnet ist, abweicht. Insbesondere kann ein maschinell lernendes Verfahren zur Anomalieerkennung eingesetzt werden, mittels dem auf eine Anomalie hindeutende Datenveränderungen erkennbar sind. Dadurch können beim Betrieb der Applikation ungewöhnliche Datendrifts erkannt und gemeldet werden.

Gemäß einem Ausführungsbeispiel ist das Datenkopplungssystem dazu konfiguriert, basierend auf einem maschinell lernenden Verfahren eine Bewertung von Formatalternativen zu einem Datenformat gemäß Datenspezifikationen zu erstellen und basierend auf der Bewertung der Formatalternativen dem Nutzer einen Vorschlag für eine Formatalternative zu unterbreiten. Vorzugsweise erfolgt dies im Initialisierungsmodus. Das Datenkopplungssystem ist beispielsweise dazu konfiguriert, dem Nutzer die vorgeschlagene Formatalternative zur Selektierung anzuzeigen, um basierend darauf die Datentransformation in das geforderte Datenformat vornehmen zu können. Das maschinell lernende Verfahren kann beispielsweise dazu ausgebildet sein, anhand von in der Vergangenheit vom Nutzer ausgewählten Formatalternativen zu einem geforderten Datenformat die Bewertung der Formatalternativen zu erstellen und dem Nutzer diejenige Formatalternative vorzuschlagen, die nutzerseits priorisiert ausgewählt wurden.

Gemäß einem Ausführungsbeispiel weist das Datenkopplungssystem eine Nutzerschnittstelle auf, über die die applikationsspezifischen Datenspezifikationen und applikationsspezifischen Datenvalidierungsspezifikationen konfigurierbar sind, über die Transformationsfunktionen zur Transformation der Daten auswählbar und/oder konfigurierbar sind und/oder über die Statusinformationen über den aktuellen Zustand des Datenkopplungssystems überprüfbar sind.

Gemäß einem weiteren Aspekt wird ein Computerprogramm offenbart. Das Computerprogramm umfasst Befehle, die bei der Ausführung des Programms durch einen Computer diesen veranlassen, das Verfahren nach einem der vorhergehenden Ausführungsbeispielen auszuführen. Gemäß einem nochmals weiteren Aspekt wird ein Datenkopplungssystem offenbart. Das Datenkopplungssystem umfasst eine Datenschnittstelle, eine Datenkopplungseinheit und eine Applikationsschnittstelle. Die Datenschnittstelle ist zum Empfang von Daten von zumindest einer Datenquelle ausgebildet. Die Applikationsschnittstelle bildet eine Schnittstelle zu der Applikation. Das Datenkopplungssystem ist als universell einsetzbares System dazu eingerichtet, zeitgleich oder zeitversetzt mehreren unterschiedlichen Applikationen Daten bereitzustellen. Das Datenkopplungssystem ist dazu konfiguriert ist, die folgenden Schritte zu vollziehen:
- Bereitstellen von applikationsspezifischen Datenspezifikationen und applikationsspezifischen Datenvalidierungsspezifikationen;
- Empfangen einer Datenanforderung von der Applikation;
- Gemäß der Datenanforderung, Empfangen von Daten aus der zumindest einen Datenquelle durch die Datenkopplungseinheit über die Datenschnittstelle;
- Prüfen, ob die empfangenen Daten die Datenspezifikationen erfüllen und transformieren der Daten in ein Datenmodell gemäß den Datenspezifikationen, falls die empfangenen Daten die Datenspezifikationen nicht erfüllen, wodurch spezifikationsgeprüfte Daten entstehen;
- Validieren der spezifikationsgeprüften Daten basierend auf den Datenvalidierungsspezifikationen, wodurch validierte Daten entstehen;
- Weiterleiten der validierten Daten an die Applikation.

Unter "Datenmodell" im Sinne der vorliegenden Erfindung wird die Struktur der Daten verstanden, die von einer Applikation verarbeitet werden. Insbesondere sind im Datenmodell Spezifikationen zu einzelnen Datenelementen, d.h. auf Feldebene, angegeben, die zu erfüllen sind, damit die Applikation die Daten verarbeiten kann.

Unter "Daten" im Sinne der vorliegenden Erfindung werden alle Informationen verstanden, die von einer Datenquelle an eine Applikation bereitgestellt werden, damit diese ausgeführt werden kann.

Unter "Datenelement" im Sinne der vorliegenden Erfindung wird ein Datenteil verstanden, der durch dessen Datentyp, Datenformat und ggf. weitere optionale Informationen, beispielsweise Verbindungen zu anderen Datenelementen, eine textuelle Beschreibung etc. charakterisiert ist. Ein Datenelement kann insbesondere ein Teil von strukturiert gespeicherten Daten, beispielsweise eine Spalte einer Tabelle, sein.

Unter "Datensatz" im Sinne der vorliegenden Erfindung wird eine Gruppe mehrerer Datenelemente verstanden, die bei der Ausführung einer Applikation verwendet werden.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand mehrerer Figuren an Ausführungsbeispielen näher erläutert. Es zeigen:
- Fig. 1: beispielhaft und grob schematisch ein Blockschaltbild eines Systems, bei dem ein Datenkopplungssystem als Verbindungseinheit zwischen mehrere Datenquellen und einer Applikation vorgesehen ist;
- Fig. 2: beispielhaft ein schematisches Blockdiagramm ähnlich der Fig. 1, wobei der funktionale Aufbau des Datenkopplungssystems veranschaulicht ist;
- Fig. 3: beispielhaft zwei Beispiele von Datenspezifikationen, die jeweils Kriterien für Datenelemente eines Datensatzes enthalten;
- Fig. 4: beispielhaft ein Beispiel einer Datenvalidierungsspezifikation, die mehrere Kriterien zur Datenvalidierung enthält; und
- Fig. 5: beispielhaft ein Ablaufdiagramm, das die Schritte des Verfahrens zur Bereitstellung von zumindest teilweise strukturierten Daten an eine Applikation mittels eines Datenkopplungssystems veranschaulicht.

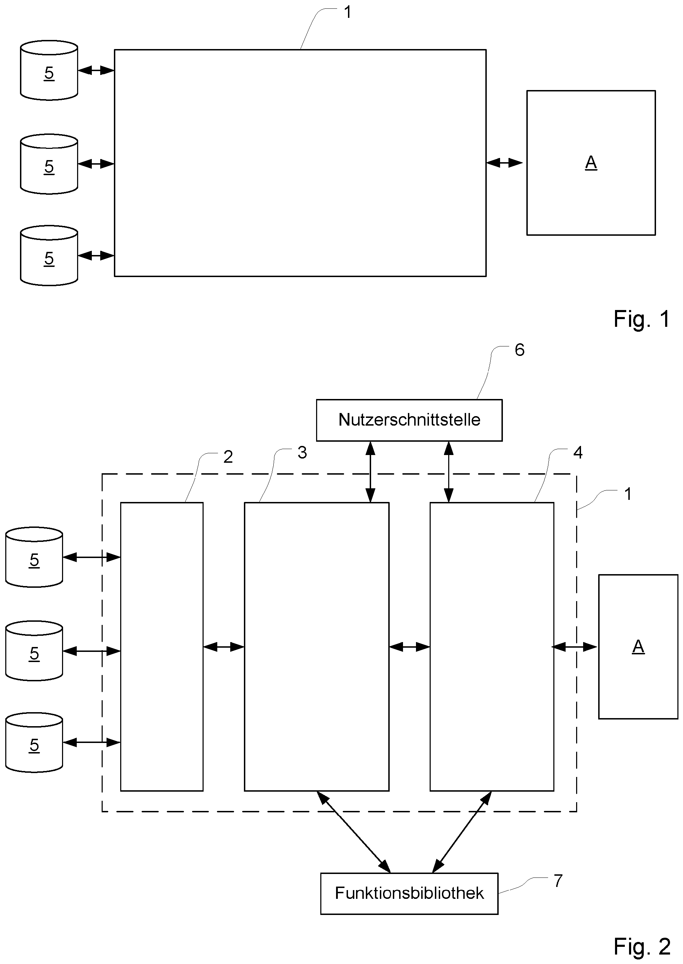

Figur 1 zeigt beispielhaft und grob schematisch ein System zur Bereitstellung von zumindest teilweise strukturierten Daten aus mehreren Datenquellen 5 an eine Applikation A mittels eines Datenkopplungssystems 1. Das Datenkopplungssystem 1 ist dazu ausgebildet, der Applikation A die von dieser benötigten Daten in dem geforderten Format und mit vorgegebener Qualität zur Verfügung zu stellen, wobei die Anforderungen hinsichtlich Format und Qualität durch applikationsspezifische Vorgaben festgelegt sind.

Das Datenkopplungssystem 1 wird beispielsweise durch eine Rechnereinheit gebildet, auf der ein die Funktionalität des Datenkopplungssystems 1 realisierendes Computerprogramm installiert ist. Die Rechnereinheit lässt sich zum einen mit einer oder mehreren Datenquellen 5, zum anderen mit der Applikation A koppeln. Die von der Applikation A benötigten Daten werden durch die Rechnereinheit hindurch der Applikation zugeführt, um die Anforderungen hinsichtlich Datenformat und Datenqualität zu erfüllen.

Das Datenkopplungssystem 1 ist ein frei konfigurierbares, für mehrere unterschiedliche Applikationen universell einsetzbares System, d.h. das Datenkopplungssystem 1 ist dazu eingerichtet, mit unterschiedlichen Applikationen zusammenzuwirken, um diesen Applikationen Daten aus zumindest einer Datenquelle 5 mit dem gewünschten Format und der geforderten Qualität zur Verfügung zu stellen und dabei zu gewährleisten, dass die jeweilige Applikation A korrekt ausgeführt wird. Dabei kann das Datenkopplungssystem 1 zeitgleich jeweils mit einer Applikation A oder aber mit mehreren Applikationen A zusammenwirken.

Fig. 2 zeigt ein schematisches Blockdiagramm des Datenkopplungssystems 1. Das Datenkopplungssystem 1 weist eine Datenschnittstelle 2, eine Datenkopplungseinheit 3 und eine Applikationsschnittstelle 4 auf. Die Datenschnittstelle 2 bildet eine Schnittstelle zu einer oder mehreren Datenquellen 5 aus. Über die Datenschnittstelle 2 ist damit ein Zugriff auf die Daten der zumindest einen Datenquelle 5 möglich. Die Daten können über die Datenschnittstelle 2 an die Datenkopplungseinheit 3 und die Applikationsschnittstelle 4 an die Applikation A weitergeleitet werden. Zudem kann über die Datenschnittstelle 2 auch ein Schreibzugriff auf die zumindest eine Datenquelle 5 ermöglicht werden. Das Datenkopplungssystem 1, insbesondere die Datenschnittstelle 2, besitzt die nötigen Lese- und/oder Schreibberechtigungen, um Daten der zumindest einen Datenquelle 5 zu lesen und/oder Daten auf die zumindest eine Datenquelle 5 zu schreiben. Die Daten können dabei entweder direkt durch einen Datenzugriff an der Datenschnittstelle empfangen werden oder aber durch eine Anfrage an einem Interface (beispielsweise ein API: Application Programming Interface) erhalten werden. Falls beispielsweise die Aktualität von Daten nicht direkt aus den Datenquellen ausgelesen werden kann, kann diese beispielsweise durch eine Schnittstellenanfrage erhalten werden.

Die Datenschnittstelle 2 kann zudem dazu ausgebildet sein, sich mit weiteren Datenquellen wie beispielsweise Datenquellen von Drittanbietern, Bibliotheken, Datenkatalogen etc. zu verbinden, um weitere Informationen zu erhalten und damit die Daten der Datenquellen anzureichern.

Die Datenschnittstelle 2 kann des Weiteren dazu ausgebildet sein, sich mit API's oder weiteren Schnittstellen zu verbinden, um Zusatzinformationen zu erhalten, Informationen in die zumindest eine Datenquelle 5 zu schreiben und/oder weitere Aktionen zu triggern, beispielsweise das Einholen einer Freigabe oder einer Leseberechtigung.

Zusammenfassend bildet die Datenschnittstelle 2 eine Zugriffsschicht (engl. access layer) des Datenkopplungssystems 1, über das die Datenkopplungseinheit 3 auf Daten der zumindest einen Datenquelle 5 zugreifen kann. In einer bevorzugten Ausführungsform ist die Datenschnittstelle 2 auch dazu ausgebildet, Daten von der Applikation A und der Datenkopplungseinheit 3 zu empfangen und diese an die zumindest eine Datenquelle 5 weiterzuleiten oder die Daten auf die zumindest eine Datenquelle 5 zu schreiben.

Die Applikationsschnittstelle 4 umfasst Spezifikationen zu Daten, die für die Ausführung der Applikation A benötigt werden. Die Spezifikationen umfassen Datenspezifikationen und Datenvalidierungsspezifikationen.

Die Datenspezifikationen definieren diejenigen Datenelemente, die für die Ausführung der Applikation A zur Verfügung stehen müssen. Die Datenvalidierungsspezifikationen definieren die Qualitätserfordernisse, die die Datenelemente erfüllen müssen, damit die Applikation A korrekt arbeitet bzw. korrekte Ergebnisse liefert. Die Datenspezifikationen und Datenvalidierungsspezifikationen sind applikationsbezogene Spezifikationen, d.h. sie sind auf die jeweilige Applikation A angepasst. Für den Fall, dass das Datenkopplungssystem 1 mit mehreren Applikationen zusammenwirkt (zeitgleich oder zeitversetzt zu unterschiedlichen Zeitpunkten), können unterschiedliche Sätze von Datenspezifikationen und Datenvalidierungsspezifikationen gespeichert sein, wobei jeder Satz einer bestimmten Applikation A zugeordnet ist. Wenn das Datenkopplungssystem 1 mit einer bestimmten Applikation A verwendet wird, wird der dieser Applikation A zugeordnete Satz von Datenspezifikationen und Datenvalidierungsspezifikationen geladen und verwendet.

Die Datenspezifikationen umfassen vorzugsweise mehrere Datensatz-Spezifikationen. Sämtliche einer Applikation A zugeordnete Datensatzspezifikationen definieren das Datenmodell der Applikation, das für die Ausführung der Applikation zur Verfügung stehen muss. Die Datensatz-Spezifikationen definieren jeweils ein oder mehrere Datenelemente mittels Informationen zu Datentyp und weiteren optionalen Informationen, beispielsweise dem Datenformat, dem Wertebereich etc. Der Datentyp kann beispielsweise angeben, ob es sich bei dem Datenelement um eine Zahl im Float- oder Integer-Format oder um eine Zeichenkette im Format String handelt. Das Datenformat kann angeben, in welchem Format die Informationen vorliegen müssen, beispielsweise Geschlechtsinformationen im Format m (männlich), w (weiblich) oder d (divers). Die Datenspezifikationen können zudem noch weitere Spezifikationen zu den Datenelementen enthalten. So kann die Datenspezifikation beispielsweise eine Verlinkung zwischen zwei Datenelementen definieren, d.h. dass ein erstes Datenelement mit einem zweiten Datenelement zusammenhängt bzw. korreliert. So kann die Datenspezifikation beispielsweise angeben, dass die Datenelemente, die in einer Spalte einer ersten Tabelle mit dem Spaltennamen "Kunde" vorhanden sind, mit den Datenelementen einer Spalte einer zweiten Tabelle mit dem Spaltennamen "Kundenname" korrelieren bzw. zusammenhängen. Diese Korrelationsinformation kann beispielsweise durch die Datenkopplungseinheit dazu genutzt werden, zu prüfen, ob die miteinander korrelierten Datenelemente beispielsweise hinsichtlich Datenformat, Datentyp und Inhalt miteinander übereinstimmen.

Zudem kann die Datenspezifikation zu den jeweiligen Datenelementen angeben, ob diese optional oder für die Ausführung der Applikation A verpflichtend sind.

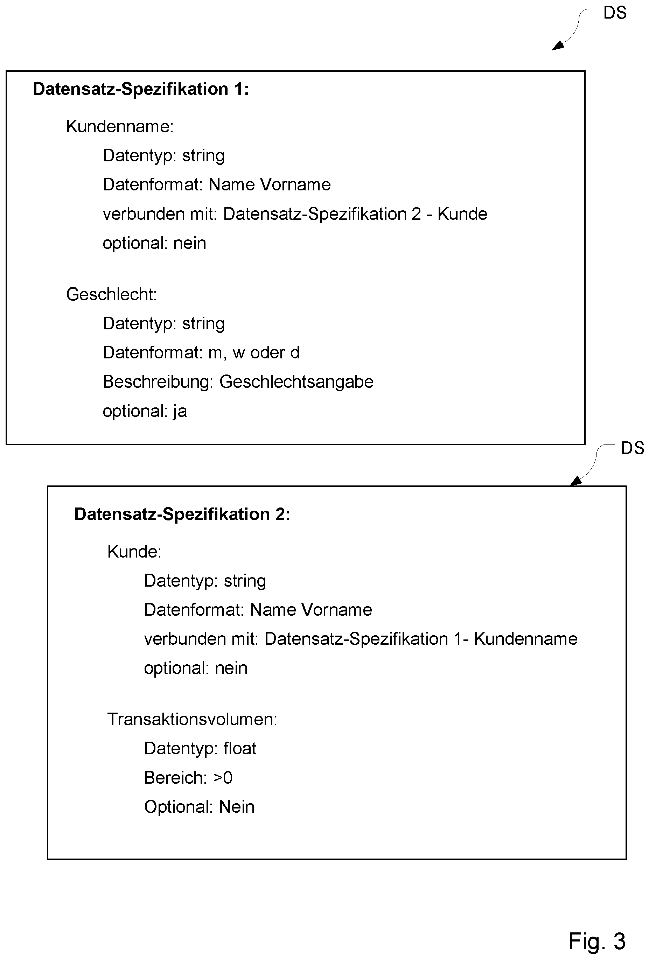

Fig. 3 zeigt beispielhaft mehrere Datenspezifikationen DS, und zwar zwei Spezifikationen von Datensätzen, die jeweils Spezifikationen zu mehreren Datenelementen enthalten. In der ersten Datensatz-Spezifikation werden die Datenelemente "Kundenname" und "Geschlecht" spezifiziert, in der zweiten Datensatz-Spezifikation die Datenelemente "Kunde" und "Transaktionsvolumen". Die Datenelemente werden durch deren Datentyp und das Datenformat bzw. den Wertebereich des Datenelements definiert. Zudem kann die Spezifikation eines Datenelements Informationen hinsichtlich der Verbindung zwischen zwei Datenelementen aufweisen, wie dies bei den Datenelementen "Kundenname" und "Kunde" der Fall ist.

In einem Datensatz können Datenelemente zusammengefasst werden, die inhaltlich zusammenhängen. So kann beispielsweise die Zusammenfassung der Datenelemente "Kundenname" und "Geschlecht" in der ersten Datensatz-Spezifikation angeben, dass sich das Geschlecht gemäß dem zweiten Datenelement auf den Kunden mit dem Kundennamen gemäß dem ersten Datenelement bezieht.

Die Datenvalidierungsspezifikationen können eine oder mehrere Validierungsbedingungen enthalten, die durch die Daten bzw. die Datenelemente erfüllt sein müssen, um die Applikation verlässlich betreiben zu können.

Die Validierungsbedingungen können eine oder mehrere der folgenden Bedingungen enthalten:
- akzeptierbare Datenformate, Werte oder Wertebereiche;
- Datenaktualität;
- Datenmenge (beispielsweise Angaben zur Datengröße und/oder Datenmenge pro Zeiteinheit);
- Vollständigkeit der Daten;
- Eindeutigkeit der Daten;
- Datenhistorie;
- Erfüllung des Aktualisierungszeitplans (beispielsweise durch Angabe, wann die Daten aktualisiert worden sein müssen, z.B. Daten müssen tagesaktuell jeweils ab 0.00 Uhr sein);
- Benötigter Lese- oder Schreibzugriff (beispielsweise durch Prüfung, ob die Applikation die nötigen Lese- und Schreibrechte und die dafür nötigen Berechtigungen und Authentifizierungen hat, z.B. Passwort, geheimer Schlüssel etc.);
- Authentifizierung;
- Datenverantwortlicher;
- Komplexe Anfragen an die zumindest eine Datenquelle durch Pushdown/JDBC möglich?
- Erfüllung des Zeitplans zur Qualitätsprüfung (beispielsweise durch Angabe, wie lange die letzte Datenqualitätsprüfung zurückliegen darf);
- Übertragungsgeschwindigkeit;
- Werden die von der Applikation vorgegebenen Grenzen eines Kostenbudgets erfüllt?
- Daten-Anonym isierung;
- Daten-Pseudonymisierung;

Die Datenvalidierungsspezifikationen können sich dabei auf einzelne oder mehrere Datenelemente, auf einen oder mehrere Datensätze, oder aber auf einen oder mehrere Datenquellen 5 beziehen.

Es kann vorkommen, dass abhängig von der Validierungsbedingung, die in der Datenvalidierungsspezifikation enthalten ist, weitere Informationen nötig sind, um die Validierungsbedingung zu prüfen. So kann beispielsweise die Prüfung der Validierungsbedingung "Datenaktualität" nur durchgeführt werden, wenn Informationen zur Aktualität der Daten zur Verfügung stehen. Die Informationen zum Zeitpunkt der letzten Aktualisierung der Daten kann beispielsweise nicht aus den Daten selbst abgelesen werden, sondern bedarf eines separaten Zugriffs auf die Datenquelle 5 mittels einer Schnittstellenabfrage über die Datenschnittstelle 2.

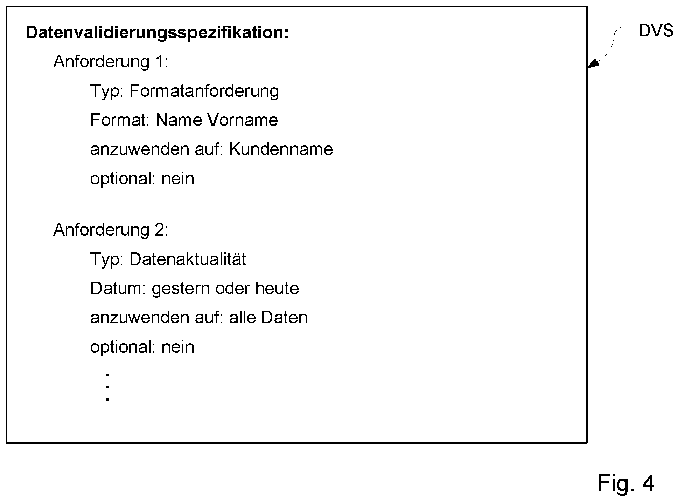

Fig. 4 zeigt beispielhaft eine Datenvalidierungsspezifikation DVS, die mehrere Validierungsbedingungen (hier Anforderung 1 und Anforderung 2 genannt) enthält. Die Anforderung 1 bezieht sich auf das Datenformat des Datenelements "Kundenname", die Anforderung 2 auf die Aktualität der Daten, die auf sämtliche Daten anzuwenden ist. Die Validierungsbedingungen können als optional oder nicht-optional gekennzeichnet sein. Eine nicht-optionale Validierungsbedingung muss erfüllt sein, um die Datenvalidierung erfolgreich zu passieren. Eine optionale Validierungsbedingung kann entweder vollständig optional sein oder lediglich für bestimmte Funktionen der Applikation A.

Es sei angemerkt, dass die Datenspezifikationen DS und die Datenvalidierungsspezifikationen DVS vorzugsweise durch die Applikationsschnittstelle 4 lediglich bereitgestellt werden. Die Prüfung, ob die Datenspezifikationen und die Datenvalidierungsspezifikationen erfüllt sind, erfolgt vorzugsweise durch die Datenkopplungseinheit 3.

Zur Erstellung und Konfiguration der Datenspezifikationen und der Datenvalidierungsspezifikationen kann die Applikationsschnittstelle 4 eine Nutzerschnittstelle aufweisen. Über diese Nutzerschnittstelle können die Spezifikationen zu den einzelnen Datenelementen definiert werden. Ebenso können über diese Nutzerschnittstelle oder eine weitere Nutzerschnittstelle die Spezifikationen zur Validierung der Daten festgelegt werden.

Nachfolgend werden die Funktionalitäten der Datenkopplungseinheit 3 näher beschrieben.

Die Datenkopplungseinheit 3 kann über die Datenschnittstelle 2 Daten von der zumindest einen Datenquelle 5 empfangen. Insbesondere sind die verfügbaren Daten für die Datenkopplungseinheit 3 sichtbar, so dass die Datenkopplungseinheit 3 die für die Applikation A nötigen Daten aus den insgesamt verfügbaren Daten vorselektieren und anfordern kann.

Die Datenkopplungseinheit 3 ist dazu konfiguriert, die Daten der Datenschnittstelle 2 mittels der Daten- und Datenvalidierungsspezifikationen, die von der Applikationsschnittstelle 4 bereitgestellt werden, zu prüfen, bei Bedarf zu transformieren und zu validieren. Damit werden aus den Daten, die durch die zumindest eine Datenquelle 5 bereitgestellt werden, spezifikationsgeprüfte und validierte Daten erzeugt, die die Datenspezifikationen und Datenvalidierungsspezifikationen der Applikation A erfüllen, so dass die Applikation A die spezifikationsgeprüften und validierten Daten verarbeiten kann und damit eine gewünschte Funktionalität bereitstellt.

Zur Transformation der Daten können Transformationsfunktionen verwendet werden. Die Datenkopplungseinheit 3 ist dazu konfiguriert, zu prüfen, ob die in der zumindest einen Datenquelle 5 vorhandenen Daten bereits die Datenspezifikationen erfüllen. Falls diese die Datenspezifikationen nicht erfüllen, können diese mittels der Transformationsfunktionen transformiert werden. Durch die Transformation entstehen modifizierte Daten, die den Datenspezifikationen entsprechen.

Ebenso kann beim Nichterfüllen einer oder mehrerer Datenvalidierungsspezifikationen eine Datentransformation initiiert werden. Durch die Datentransformation entstehen wiederum modifizierte Daten, die den Datenvalidierungsspezifikationen entsprechen.

Die Datenkopplungseinheit 3 kann vorzugsweise Transformationsfunktionen vorsehen, um ein Datenelement in einer Datenquelle 5, das nicht in dem Datenformat gemäß der Datenspezifikation, jedoch in einer Formatalternative vorliegt, in das Datenformat gemäß Datenspezifikation zu überführen. Die Transformationsfunktion kann beispielsweise ein Mapping von einer Formatalternative in das gemäß Datenspezifikation geforderte Datenformat vornehmen. Ein Beispiel hierfür ist Überführung der Information "männlich/weiblich/divers" in "m/w/d". Ein derartiges Mapping setzt voraus, dass in den Daten die gewünschte Information grundsätzlich vorhanden ist, jedoch in einem alternativen Format.

Zudem können Transformationsfunktionen vorgesehen sein, um die folgenden Datentransformationen zu vollziehen:
- Filterung von Daten (bspw. das Ausfiltern von Nullen, das Ausfiltern von Ausreißern etc.);
- Skalierung von Daten;
- Normalisierung von Daten;
- Umwandeln des Datentyps;
- Löschen eines Teils von Daten, beispielsweise in Form einer Filterung;
- Anonymisierung/Pseudonymisierung von Daten;
- Ergänzen von Werten zur Behebung einer fehlenden Wertezuweisung (beispielsweise Einfügen einer Geokoordinate abgeleitet aus Adressinformationen).

Vorzugsweise muss die Datenkopplungseinheit 3 zunächst für eine Verwendung mit einer bestimmten Applikation A konfiguriert bzw. initialisiert werden. Dabei müssen die Datenspezifikationen und Datenvalidierungsspezifikationen definiert werden. Zudem müssen die Transformationsfunktionen und die Validierungsfunktionen festgelegt werden. Dies erfolgt vorzugsweise in einer Initialisierungsphase. Nach der Konfiguration bzw. Initialisierung der Datenkopplungseinheit 3 kann die Initialisierungsphase beendet und die Datenkopplungseinheit 3 in einer Produktionsphase betrieben werden.

Vorzugsweise verbleibt die Datenkopplungseinheit 3 so lange in der Initialisierungsphase, bis alle in den Datenspezifikationen als notwendig gekennzeichnete Datenelemente in der zumindest einen Datenquelle 5 gefunden werden konnte oder diese durch Transformation aus den verfügbaren Daten erhalten werden konnten.

In der Initialisierungsphase kann die Datenkopplungseinheit 3 folgende Vorgänge vollziehen:
Die Datenkopplungseinheit 3 identifiziert die in der zumindest einen Datenquelle 5 vorhandenen Datenelemente, die die Datenspezifikationen erfüllen. Die Ermittlung von Datenelementen, die die in den Datenspezifikationen enthaltenen Vorgaben (z.B. Datentyp, Datenformat etc.) erfüllen, kann beispielsweise mittels eines regelbasierten Algorithmus erfolgen.

Es werden noch fehlende Datenelemente durch die Datenkopplungseinheit 3 an die Nutzerschnittstelle 6 automatisch gemeldet. Dadurch ist es dem Nutzer möglich, beispielsweise Datenelemente, die inhaltlich den noch fehlenden Datenelementen entsprechen, in den Datenquellen 5 zu suchen und diese durch Anwenden oder Definieren von Transformationsfunktionen in ein Datenformat zu transformieren, das dem von der Applikation A geforderten Datenformat entspricht. Dabei wird vorzugsweise zwischen für den Betrieb der Applikation A notwendigen Datenelementen und optionalen Datenelementen unterschieden. Fehlende optionale Datenelemente werden vorzugsweise ebenfalls gemeldet, jedoch kann das Datenkopplungssystem 1 auch dann von der Initialisierungsphase in die Produktionsphase überführt werden, wenn lediglich optionale Datenelemente fehlen, sämtliche gemäß Datenspezifikationen notwendige Datenelemente jedoch vorhanden sind.

Es können aus einem Satz von verfügbaren Transformationsfunktionen Transformationsvorschläge unterbreitet werden, mittels denen aus den in den Datenquellen 5 vorhandenen Daten die noch fehlenden Datenelemente erhalten werden können. Diese Transformationsvorschläge werden vorzugsweise an der Nutzerschnittstelle 6 bereitgestellt. Damit kann der Nutzer eine Auswahl treffen, welche Transformationsfunktion zur Gewinnung eines noch fehlenden Datenelements aus den verfügbaren Daten verwendet werden soll.

Falls bereits validierte Transformationsfunktionen zur Transformation von Daten aus einem alternativen Datenformat in das gemäß den Datenspezifikationen geforderte Datenformat vorhanden sind, werden diese Transformationsfunktionen in der Initialisierungsphase angewendet. Dies kann entweder automatisch (d.h. ohne Validierung durch den Nutzer) oder erst nach einer Validierung der Transformation durch den Nutzer erfolgen.

Weiterhin kann vorzugsweise geprüft werden, ob die gemäß den Datenspezifikationen definierten Verbindungen zwischen unterschiedlichen Datenelementen vorhanden sind. So kann beispielsweise in dem in Fig. 3 gezeigten Beispiel geprüft werden, ob zwischen den Datenelementen "Kunde" und "Kundenname" eine Verbindung besteht, beispielsweise in Form einer übereinstimmenden Kennung (bspw. Kundennummer), die beiden Datenelementen zugeordnet ist.

Vorzugsweise werden dem Nutzer an der Nutzerschnittstelle 6 durch die Datenkopplungseinheit 3 Datenvorschläge unterbreitet. Die Datenvorschläge können auf in der zumindest einen Datenquelle 5 verfügbare Datenelemente verweisen, die nicht in dem gemäß den Datenspezifikationen geforderten Datenformat, sondern in einer Formatalternative vorliegen. Die Ermittlung von Datenelementen, die die Formatalternativen erfüllen, kann beispielsweise mittels eines regelbasierten Algorithmus erfolgen.

Zudem können für den Fall, dass gemäß den Datenspezifikationen geforderte Daten in der zumindest einen Datenquelle 5 mehrfach vorhanden sind (beispielsweise in Form einer in unterschiedlichen Tabellen vorhandenen Spalte mit inhaltsgleichen Datenelementen), dem Nutzer diese Daten angezeigt werden, damit dieser eine Auswahl treffen kann, welche Daten verwendet werden sollen.

In der Initialisierungsphase können zudem weitere durch maschinell lernende Verfahren unterstützte Vorgänge vollzogen werden:
Es kann ein maschinell lernender Algorithmus vorgesehen sein, der zur Analyse ausgebildet ist, mit welcher Häufigkeit oder Wahrscheinlichkeit ein bestimmter Datensatz aus einer Gruppe mehrerer inhaltsgleicher Datensätze von dem Nutzer oder den Nutzern ausgewählt wird. Der maschinell lernende Algorithmus kann beispielsweise ein überwacht lernender Algorithmus sein, d.h. ein Algorithmus, dessen Funktionalität basierend auf Nutzerfeedback weiterentwickelt wird. Der Algorithmus kann dazu konfiguriert sein, basierend auf Informationen, welchen Datensatz ein Nutzer aus mehreren inhaltsgleichen Datensätzen auswählt, zukünftig Vorschläge zum Auswählen von verfügbaren Daten zu unterbreiten. So kann beispielsweise mittels des maschinell lernenden Algorithmus erreicht werden, dass aus mehreren inhaltsgleichen Datensätzen ein Datensatz, der am häufigsten von einem Nutzer gewählt wird, zukünftig dem Nutzer als bevorzugter Datensatz für die Lieferung von Daten einer bestimmten Datenspezifikation vorgeschlagen wird.

Des Weiteren kann ein maschinell lernender Algorithmus vorgesehen sein, der zur Analyse ausgebildet ist, mit welcher Häufigkeit oder Wahrscheinlichkeit eine bestimmte Formatalternative aus einer Gruppe mehrerer möglicher Formatalternativen von dem Nutzer oder den Nutzern ausgewählt wird, um Daten in einem geforderten Datenformat zu erhalten. Der maschinell lernende Algorithmus kann beispielsweise ein überwacht lernender Algorithmus sein, d.h. ein Algorithmus, dessen Funktionalität basierend auf Nutzerfeedback weiterentwickelt wird. Der Algorithmus kann basierend auf Informationen, welche Formatalternative ein Nutzer aus einem Satz von mehreren möglichen Formatalternativen zur Erreichung eines bestimmten Datenformats auswählt, zukünftig Vorschläge zum Auswählen von Formatalternativen unterbreiten. So kann beispielsweise mittels des maschinell lernenden Algorithmus erreicht werden, dass eine Formatalternative, die am häufigsten von einem Nutzer gewählt wird, zukünftig dem Nutzer als bevorzugte Formatalternative vorgeschlagen wird.

Zudem kann ein weiterer maschinell lernender Algorithmus vorgesehen sein, der abhängig von dem jeweiligen Datenquellentyp die Lage von Daten analysiert. Ein Datenquellentyp kann beispielsweise eine anbieterspezifische Datenbank, beispielsweise SAP-System etc. sein. Der maschinell lernende Algorithmus kann beispielsweise ein überwacht lernender Algorithmus sein, d.h. ein Algorithmus, dessen Funktionalität basierend auf Nutzerfeedback weiterentwickelt wird. Der Algorithmus kann beispielsweise dazu konfiguriert sein, basierend auf Metadaten oder Eingaben des Nutzers zu erlernen, an welcher Stelle in der Datenbank Daten vorhanden sind, die einer vorgegebenen Datenspezifikation oder einer Formatalternative zu diese Datenspezifikation entsprechen (beispielsweise eine Spalte zum Geschlecht mit dem Format m/w/d einer Person, die durch eine Personen-ID mit einem vorgegebenen Format spezifiziert ist). Der Algorithmus kann basierend auf den gesammelten Informationen, wo Daten einer vorgegebenen Datenspezifikation oder einer Formatalternative in einer Datenquelle dieses Datenquellentyps zu finden ist, zukünftig das Auffinden dieser Daten erleichtern, beispielsweise indem dem Nutzer ein Datenvorschlag unterbreitet wird.

Ein weiterer maschinell lernender Algorithmus kann dazu vorgesehen sein, aufgrund des Dateninhalts Daten zu erkennen, die zwar nicht die geforderten Datenspezifikationen der Applikation erfüllen, deren Inhalt jedoch mit den von der Applikation benötigten Daten übereinstimmt. Der maschinell lernende Algorithmus kann beispielsweise ein überwacht lernender Algorithmus sein, d.h. ein Algorithmus, dessen Funktionalität basierend auf Nutzerfeedback weiterentwickelt wird. So kann beispielsweise in der Datensatz-Spezifikation definiert sein (beispielsweise mittels eines Labels etc.) dass es sich bei den geforderten Daten um einen bestimmten Datentyp, beispielsweise Adressinformationen, Geschlechtsinformationen, IBAN, Email-Adresse etc. handelt. Der maschinell lernende Algorithmus kann anschließend anhand des Spaltennamens der Daten, mittels eines natural language processing-Algorithmus oder eines named-entity recognition-Algorithmus ermitteln, ob Daten in der zumindest einen Datenquelle vorhanden sind, die dem geforderten Dateninhalt entsprechen. Zudem kann der Algorithmus dazu ausgebildet sein, eine Transformationsfunktion bzw. eine Formatalternative vorzuschlagen, falls die ermittelten Daten nicht in dem geforderten Datenformat vorliegen.

Ein weiterer maschinell lernender Algorithmus kann dazu ausgebildet sein, Formatalternativen von Daten anhand der statistischen Verteilung der Datenwerte zu erkennen. Der maschinell lernende Algorithmus kann beispielsweise ein überwacht lernender Algorithmus sein, d.h. ein Algorithmus, dessen Funktionalität basierend auf Nutzerfeedback (beispielsweise dem nutzerseitigen Bestätigen einer Formatalternative) weiterentwickelt wird. So kann beispielsweise aus Daten, die eine geschlechterspezifische Datenverteilung aufweisen (z.B. drei Werte mit der Verteilung 49% / 49% / 2%), rückgeschlossen werden, dass es sich bei den Daten um Geschlechtsinformationen handeln kann. Die aufgrund der Datenverteilung aufgefundenen Daten können anschließend dem Nutzer an der Nutzerschnittstelle 6 bereitgestellt werden, damit dieser die Daten sichten kann. Zudem kann eine nutzerbasierte oder automatisierte Generierung einer Transformationsfunktion bzw. Formatalternative vorgesehen sein, um die verfügbaren Daten in das gemäß Datenspezifikation geforderte Datenformat zu überführen.

Ein weiterer maschinell lernender Algorithmus kann dazu ausgebildet sein, zu analysieren, mit welcher Häufigkeit oder Wahrscheinlichkeit eine Datentransformation oder Transformationsfunktion aus einer Gruppe mehrerer möglicher Datentransformationen oder Transformationsfunktionen von dem Nutzer oder den Nutzern ausgewählt wird, um Daten in einem geforderten Datenformat zu erhalten. Der maschinell lernende Algorithmus kann beispielsweise ein überwacht lernender Algorithmus sein, d.h. ein Algorithmus, dessen Funktionalität basierend auf Nutzerfeedback (d.h. nutzerseits ausgewählte Datentransformation oder Transformationsfunktion) weiterentwickelt wird. Der Algorithmus kann basierend auf Informationen, welche Datentransformation oder Transformationsfunktion ein Nutzer aus einem Satz von mehreren möglichen Datentransformationen oder Transformationsfunktionen zur Erreichung eines bestimmten Datenformats auswählt, zukünftig Vorschläge zum Auswählen von Datentransformationen oder Transformationsfunktionen unterbreiten. So kann beispielsweise mittels des maschinell lernenden Algorithmus erreicht werden, dass eine Datentransformation, die am häufigsten von einem Nutzer gewählt wird, zukünftig dem Nutzer als bevorzugte Datentransformation vorgeschlagen wird.

Es versteht sich, dass die vorgenannten Funktionalitäten auch in einem oder mehreren maschinell lernenden Algorithmen zusammengefasst sein können.

Vorzugsweise bietet die Datenkopplungseinheit 3 dem Nutzer in Initialisierungsphase halbautomatisierte Entscheidungshilfen, um der Applikation A die erforderlichen Daten gemäß den Datenspezifikationen zur Verfügung zu stellen. So werden, wie zuvor beschrieben beispielsweise Formatalternativen oder mehrere passende Daten durch die Datenkopplungseinheit 3 dem Nutzer an der Nutzerschnittstelle angeboten. Die Entscheidung wird jedoch nicht automatisch getroffen, sondern die jeweilige Entscheidung muss vom Nutzer selbst getroffen werden.

Das Datenkopplungssystem 1 bleibt in der Initialisierungsphase bis sämtliche für den Betrieb der Applikation A notwendige, in den Datenspezifikationen definierte Datenelemente entweder direkt aus der zumindest einen Datenquelle 5 ausgelesen oder durch eine Transformation aus den in der zumindest einen Datenquelle 5 verfügbaren Daten abgeleitet werden konnten.

Wenn sämtliche für den Betrieb der Applikation A notwendige Datenelemente ermittelt wurden, kann das Datenkopplungssystem 1 von der Initialisierungsphase in die Produktionsphase überführt werden. In der Produktionsphase wird entweder intermittierend oder fortlaufend geprüft, ob die Daten die Datenvalidierungsspezifikationen erfüllen.

Insbesondere werden die Daten, die bereits hinsichtlich der Datenspezifikationen geprüft wurden (als spezifikationsgeprüfte Daten bezeichnet), basierend auf den Datenvalidierungsspezifikationen geprüft, um sicherzustellen, dass die der Applikation A zugeführten Daten nicht nur das richtige Datenformat haben, sondern hinsichtlich weiterer Qualitätsvoraussetzungen, die mittels der Datenvalidierungsspezifikationen geprüft werden, valide sind und damit die Applikation A korrekte Ergebnisse liefern kann.

Wenn in der Produktionsphase die Datenvalidierungsspezifikationen nicht mehr erfüllt sind und/oder Datenlücken auftreten (d.h. einmal verfügbare Daten können nicht mehr erreicht werden), wird eine Meldung an den Nutzer ausgegeben.

Während der Produktionsphase werden vorzugsweise die Transformationen von Daten, die in der Initialisierungsphase eingerichtet wurden, weiter vollzogen, um für die Erfüllung der Datenspezifikationen bzw. Datenvalidierungsspezifikationen notwenige Datentransformationen vornehmen zu können. Zudem können auch während der Produktionsphase über die Nutzerschnittstelle 6 weitere Datentransformationen eingerichtet werden, sofern diese notwendig werden sollten.

Falls in der Produktionsphase Datenlücken auftreten oder Daten zumindest zeitweise nicht mehr verfügbar sind, können Datenwiederherstellungsregeln angewendet werden, um die Daten verfügbar zu machen. Die Datenwiederherstellungsregeln können beispielsweise angeben, dass bei statischen Daten die Daten der letzten Datenspeicherung verwendet werden. Bei sich verändernden Daten können die Datenwiederherstellungsregeln auf alternative Daten identischen Dateninhalts verweisen, beispielsweise auf eine Spalte in einer anderen Datenquelle, die inhaltsgleiche Daten aufweist.

In der Produktionsphase können zudem weitere durch maschinell lernende Verfahren unterstützte Vorgänge vollzogen werden:
Es kann ein maschinell lernender Algorithmus vorgesehen sein, der dazu ausgebildet ist, eine Validierung von sich über die Zeit ändernden Daten zu ermöglichen. Der Algorithmus ist dazu ausgebildet, die Daten der Datenquellen 5, insbesondere diejenigen Daten, die durch die Datenkopplungseinheit 3 verarbeitet und der Applikation A bereitgestellt werden, über die Zeit zu monitoren, um dadurch Schemen von Datenveränderungen (zeitliche Abläufe, ein Werteintervall, einen Erwartungswert, eine Standardabweichung etc.), zu erlernen. Insbesondere können Anomalierkennungsverfahren eingesetzt werden, um auffällige Datenveränderungen zu erkennen. Diese Verfahren können beispielsweise einen LOF-Algorithmus (LOF: Local Outlier Factor), einen K-NN Algorithmus oder einen isolation-forest-Algorithmus umfassen. Wenn der Algorithmus Datenveränderungen erkennt, die als auffällig eingestuft werden, weil diese von den typischen, erlernten Datenveränderungen abweichen, wird eine Meldung an den Nutzer über die Nutzerschnittstelle 6 ausgegeben. Dadurch können auffällige Datendrifts erkannt und dem Nutzer gemeldet werden.

Ein weiterer maschinell lernender Algorithmus kann dazu ausgebildet sein, Vorhersagen bzw. Prognosen zu sich zeitlich ändernden Daten zu erzeugen. Der Algorithmus kann neben den sich zeitlich ändernden Daten weitere Informationen empfangen, die mit den sich zeitlich ändernden Daten korrelieren und diese beeinflussen. Ein Beispiel für sich zeitlich ändernde Daten und damit korrelierter weiterer Informationen kann der Produktumsatz und die produzierte Anzahl eines Produkts sein. Wenn beispielsweise ein Produkt stark nachgefragt ist und daher temporär in höherer Anzahl produziert wird (weitere Information), wird sich mit einem zeitlichen Versatz der Umsatz mit diesem Produkt ändern (zeitveränderliche Daten). Ein fest regelbasierter Algorithmus würde hier eine Meldung ausgeben, da sich der Umsatz regelabweichend ändert. Durch einen maschinell lernenden Algorithmus, der die Korrelation zwischen den zeitveränderlichen Daten und den damit korrelierten weiteren Informationen erlernt hat, kann erreicht werden, dass diese Veränderung nicht als Anomalie erkannt wird. Wenn die zeitliche Veränderung der Daten jedoch über eine Schwelle von der erlernten Korrelation abweicht, kann der Algorithmus einen Alarm an den Nutzer ausgeben, um ungewöhnliche Datendrifts zu melden.

Während der Produktionsphase kann zudem ein maschinell lernender Algorithmus verwendet werden, der Datentransformationen vorschlägt, um nach der Datentransformation Datenvalidierungsspezifikationen einzuhalten. Der Algorithmus kann dabei aus den in der Vergangenheit erkannten fehlgeschlagenen Datenvalidierungen und den darauf angewendeten Datentransformationen, die zu einer erfolgreichen Datenvalidierung geführt haben, lernen, welche Transformationsfunktion bei einer fehlgeschlagenen Datenvalidierung bevorzugt angewendet werden soll und schlägt diese Transformationsfunktion dem Nutzer zur Datentransformation vor.

Ein weiterer maschinell lernender Algorithmus kann dazu ausgebildet sein, das Datenformat und/oder den Dateninhalt der Daten zu erfassen und zu erlernen. Falls eine Änderung des Datenformats und/oder des Dateninhalts erfolgt, der von dem erlernten Muster abweicht, beispielsweise derart, dass sich das Datenformat durch Einfügen oder Weglassen von Ziffern oder Buchstaben (beispielsweise hinzugefügte oder weggelassene Nullen) ändert, kann der Algorithmus eine Datentransformation, insbesondere eine Transformationsfunktion vorschlagen, die die Daten in den ursprünglichen Dateninhalt bzw. das ursprüngliche Datenformat überführt.

Während der Produktionsphase kann zudem ein maschinell lernender Algorithmus verwendet werden, der bei fehlenden Daten oder nicht vollständigen Daten dem Nutzer einen Vorschlag zu alternativen Daten unterbreitet. Der Algorithmus kann beispielsweise dazu ausgebildet sein, eine Datenanalyse zu vollziehen, um die zeitliche Änderung der Daten zu erfassen. Der Algorithmus kann beispielsweise dazu ausgebildet sein, zu erlernen, welche Dynamik der Dateninhalt hat, d.h. ob es sich um statische Daten oder sich zeitlich ändernde Daten handelt. So können beispielsweise bei statischen Daten die zuletzt gesicherten Daten als alternativen Daten verwendet werden. Der Algorithmus kann ein überwacht lernender Algorithmus sein, der abhängig von dem Ergebnis, ob der Vorschlag von dem Nutzer akzeptiert wird oder nicht, adaptiert wird.

Während der Produktionsphase werden mittels der Datenspezifikationen geprüfte und mittels der Datenvalidierungsspezifikationen validierte Daten an die Applikation A weitergeleitet. Vorzugsweise werden der Applikation A zudem Statusinformationen zugeführt, mittels denen der Applikation A der Datenstatus mitgeteilt wird. Basierend auf den Statusinformationen kann die Applikation A vorzugsweise eine Meldung oder einen Alarm absetzen, wenn die Daten nicht die erforderliche Qualität aufweisen oder nicht das vorgesehene Datenformat erfüllen. In anderen Worten wird die Meldung / Alarmierung nicht durch das Datenkopplungssystem 1 vollzogen, sondern durch die Applikation A selbst.

Die Datenkopplungseinheit 3 nutzt vorzugsweise mehrere Funktionen, mittels denen die aus der zumindest einen Datenquelle 5 verfügbaren Daten validiert und transformiert werden, um die Datenspezifikationen und Datenvalidierungsspezifikationen zu erfüllen.

Die Datenkopplungseinheit 3 kann insbesondere folgende Funktionen nutzen.

Zunächst können Monitoringfunktionen genutzt werden. Die Monitoringfunktionen sind dazu konfiguriert, die verfügbaren Daten hinsichtlich Änderungen, Anomalien und/oder Inkonsistenzen etc. zu prüfen. Eine Monitoringfunktion kann dazu ausgebildet sein, das Absetzen einer Fehlermeldung oder Warnung zu triggern, falls die in der Monitoringfunktion enthaltene zumindest eine Bedingung nicht erfüllt ist.

Des Weiteren können in der Datenkopplungseinheit 3 Validierungsfunktionen implementiert sein. Die Validierungsfunktionen sind dazu eingerichtet, Anforderungen hinsichtlich des Datenformats oder Validierungsanforderungen zu prüfen. Insbesondere kann mittels der Validierungsfunktionen geprüft werden, ob die Anforderungen der Datenspezifikationen und/oder der Datenvalidierungsspezifikationen erfüllt werden.

Zuletzt kann die Datenkopplungseinheit 3 Transformationsfunktionen vorsehen, mittels denen Datentransformationen vollzogen werden können.

Nachfolgend werden die jeweiligen Funktionen näher beschrieben.

Die Monitoringfunktionen werden vorzugsweise lediglich in der Produktionsphase und nicht in der Initialisierungsphase vollzogen. Die Monitoringfunktionen nutzen vorzugsweise die Datenhistorie, d.h. das Datenverhalten bzw. Datenverläufe in der Vergangenheit, um Änderungen, Anomalien und/oder Inkonsistenzen zu erkennen. Hierzu wird beispielsweise ein Vergleich der aktuellen Daten bzw. des aktuellen Datenverlaufs mit einem Erwartungswert oder einem Datenintervall, die aus historischen Daten ermittelt wurden, vorgenommen. Bei einer Abweichung der Daten von dem Erwartungswert über einem Schwellwert oder Daten außerhalb des Datenintervalls ist die Monitoringfunktion dazu konfiguriert, eine Meldung oder einen Alarm zu senden.

Die Validierungsfunktionen können sowohl in der Initialisierungsphase als auch in der Produktionsphase angewendet werden. Jedoch können die in der jeweiligen Phase angewendeten Validierungsfunktionen unterschiedlich sein. Eine Validierungsfunktion kann als Eingangswert ein oder mehrere Datenelemente und optional einen oder mehrere Zusatzparameter erhalten. Die Zusatzparameter können beispielsweise Schwellwerte (beispielsweise zur Prüfung, ob die Datenelemente über dem Schwellwert liegen), ein Datumsbereich (beispielsweise zur Prüfung, ob alle Datenelemente in den vorgegebenen Datumsbereich fallen), eine externe Datenschnittstelle (zur Prüfung von in den Datenelementen enthaltenen Informationen gegenüber den über die externe Datenschnittstelle verfügbaren Informationen) etc. sein. Die Validierungsfunktion kann alternativ auch auf alle Datenelemente, die von der Datenquelle 5 durch die Datenkopplungseinheit 3 empfangen werden, angewendet werden. Dies kann beispielsweise in der Initialisierungsphase sinnvoll sein, um Daten zu ermitteln, die gewisse Formatkriterien erfüllen.

Die Ausgangsdaten der Validierungsfunktion können Datenelemente sein, die das zumindest eine in der Validierungsfunktion definierte Kriterium erfüllen, beispielsweise ein Formatkriterium, ein Pattern, einen Wertebereich etc. Es versteht sich, dass eine Validierungsfunktion auch mehrere miteinander kombinierte Kriterien prüfen kann (beispielsweise durch und bzw. oder-Funktionen verknüpfte Kriterien). Zudem können als Ausgangsgröße der Validierungsfunktion weitere Ausgangsinformationen bereitgestellt werden, beispielsweise die Zusammenfassung der Ergebnisse mehrerer zurückliegender Validierungen, die benötigte Zeitdauer für die Validierung, den Namen des Qualitätsprüfers etc.

Die Transformationsfunktionen sind dazu konfiguriert, eine oder mehrere Datenelemente zu transformieren, d.h. die Datenelemente zu modifizieren.

Die Transformationsfunktion empfängt hierzu zumindest ein Datenelement. Optional können der Transformationsfunktion auch ein oder mehrere Zusatzparameter als Eingangsinformationen zugeführt werden. Die Zusatzparameter können beispielsweise Angaben zu Datenquellen zur Informationsergänzung (beispielsweise ein Link zu einem Service, der Adressinformationen in Geokoordinaten umsetzt) oder Parameter für die jeweilige Transformationsfunktion (z.B. Zielformat oder die Anzahl der Iterationen bei der Berechnung) sein. Die Transformationsfunktion modifiziert daraufhin das empfangene Datenelement und stellt am Ausgang ein transformiertes Datenelement zur Verfügung. Die Modifikation kann beispielsweise eine Formatänderung (z.B. ein Mapping von einem ersten Datenformat in ein alternatives zweites Datenformat) sein. Alternativ kann die Transformation eine Filterung von Daten (bspw. das Ausfiltern von Nullen, das Ausfiltern von Ausreißern etc.), ein Skalieren von Daten, ein Normalisieren von Daten, ein Umwandeln von Datenelementen von einem ersten Datentyp in einen zweiten Datentyp, ein Anonymisieren oder Pseudonymisieren von Daten etc. sein.

Die Datentransformation mittels einer Transformationsfunktion kann unabhängig von einer Validierungsfunktion oder in Kombination mit einer Validierungsfunktion erfolgen. So kann beispielsweise eine Datentransformation auf Datenelemente ohne vorherige Ausführung einer Validierungsfunktion durchgeführt werden. Alternativ ist es möglich, dass eine Transformationsfunktion mit einer Validierungsfunktion derart zusammenwirkt, dass das Ergebnis der Validierungsfunktion die Ausführung der entsprechenden Transformationsfunktion triggert. So kann beispielsweise mittels einer Validierungsfunktion geprüft werden, ob Datenelemente in einem bestimmten Format vorliegen. Wenn das geforderte Format nicht vorliegt, können die Datenelemente mittels der Transformationsfunktion, die dieser Validierungsfunktion zugeordnet ist, in das gewünschte Datenformat überführt werden. Als weiteres Beispiel für eine Kombination einer Validierungsfunktion und einer Transformationsfunktion kann beispielsweise eine Datenfilterung dienen. Mittels der Validierungsfunktion kann beispielsweise geprüft werden, ob die Datenelemente Nullwerte aufweisen. Die dieser Validierungsfunktion entsprechende Transformationsfunktion kann dann, wenn Nullwerte erkannt wurden, diese Nullwerte beispielsweise ausfiltern.

Zudem ist es möglich, unabhängig von der Datentransformation final eine Validierungsfunktion anzuwenden, beispielsweise um eine finale Datenvalidierung der Daten, die an die Applikation A übermittelt werden, vorzunehmen.

Die Monitoring-, Validierungs- und Transformationsfunktionen können an der Nutzerschnittstelle 6 erstellt und konfiguriert werden. Vorzugsweise ist an der Nutzerschnittstelle auch eine Zuweisung von Transformationsfunktionen zu den jeweiligen Validierungsfunktionen möglich, um eine zu der jeweiligen Validierungsfunktion passende Transformationsfunktion zu wählen.

Um das Datenkopplungssystem 1 universell einsetzen zu können, d.h. zur Bereitstellung von Daten an mehrere unterschiedliche Applikationen A, kann das Datenkopplungssystem 1 eine Schnittstelle zu einer Funktionsbibliothek aufweisen. In der Funktionsbibliothek können beispielsweise mehrere Monitoringfunktionen, Validierungsfunktionen und/oder Transformationsfunktionen hinterlegt sein, die bei Bedarf für das Monitoring, die Datentransformation und/oder die Datenvalidierung für die jeweilige Applikation A verwendet werden können. Dadurch ist es möglich, eine einmal erstellte Funktion mehreren Datenkopplungssystemen 1 zugänglich zu machen.

Zudem kann das Datenkopplungssystem 1 eine externe Schnittstelle aufweisen, über die auf Transformationsfunktionen und/oder Validierungsfunktionen in einem öffentlich zugänglichen bzw. frei verfügbaren Speicher zugegriffen werden kann.

Nachfolgend wird die Nutzerschnittstelle 6 näher beschrieben. Über die Nutzerschnittstelle 6 ist es dem menschlichen Nutzer des Datenkopplungssystems 1 möglich, die Funktionalität des Datenkopplungssystems 1 zu konfigurieren, insbesondere die Datenspezifikationen und Datenvalidierungsspezifikationen festzulegen, und den aktuellen Zustand des Datenkopplungssystems 1 zu monitoren, beispielsweise ob bzw. welche Daten der Applikation A nicht im erforderlichen Format bzw. in der erforderlichen Qualität zur Verfügung gestellt werden können.

Die Nutzerschnittstelle 6 kann einen Spezifikationsmanager aufweisen. Mittels des Spezifikationsmanagers können vorzugsweise die Datenspezifikationen und Datenvalidierungsspezifikationen hinzugefügt, festgelegt und konfiguriert werden. Zudem können Monitoring-, Validierungs- und Transformationsfunktionen mit der Applikation A verknüpft werden, so dass diese bei der Applikation A angewendet werden. Auch kann mittels des Spezifikationsmanagers eine Verknüpfung von Validierungsfunktionen und Transformationsfunktionen erfolgen, und zwar derart, dass eine Validierungsfunktion Datenelemente hinsichtlich vorgegebener Datenspezifikationen und/oder Datenvalidierungsspezifikationen prüft und die Transformationsfunktion anschließend die Datenelemente modifiziert, um die Datenspezifikationen und/oder Datenvalidierungsspezifikationen zu erfüllen.

Die Nutzerschnittstelle 6 kann zudem eine Statusanzeigeeinheit aufweisen, an dem der Status des Datenkopplungssystems 1 angezeigt wird. Insbesondere kann an der Statusanzeigeeinheit der Status der Monitoring-, Validierungs- und Transformationsfunktionen angezeigt werden, um feststellen zu können, ob bzw. wo Datenprobleme bestehen. Mittels der Statusanzeigeeinheit können beispielsweise fehlende, von der Applikation A zur Ausführung benötigte Daten angezeigt werden. Zudem können verfügbare Datenelemente und Formatalternativen zu diesen Datenelementen automatisiert gefunden und angezeigt werden, so dass ein Nutzer die noch zur Ausführung der Applikation A benötigten Daten basierend auf den vorhandenen Daten und deren Formatalternativen selektieren und die zugehörige Transformation validieren kann.

Die Statusanzeigeeinheit kann ferner dazu verwendet werden, Fehler bzw. Warnungen von Monitoring-, Validierungs- und Transformationsfunktionen zur Anzeige zu bringen. Auch können im Falle einer fehlgeschlagenen Validierung von Daten Gründe für das Scheitern der Validierung angezeigt werden, um die Fehlersuche zu erleichtern. Auch die Modifikation bzw. Selektion der Datentransformation kann über die Statusanzeigeeinheit erfolgen, um die Validierungsfunktion zu erfüllen.

Zuletzt kann an der Statusanzeigeeinheit der finale, an die Applikation A übermittelte Datensatz (d.h. die spezifikationsgeprüften und validierten Daten) angezeigt werden.

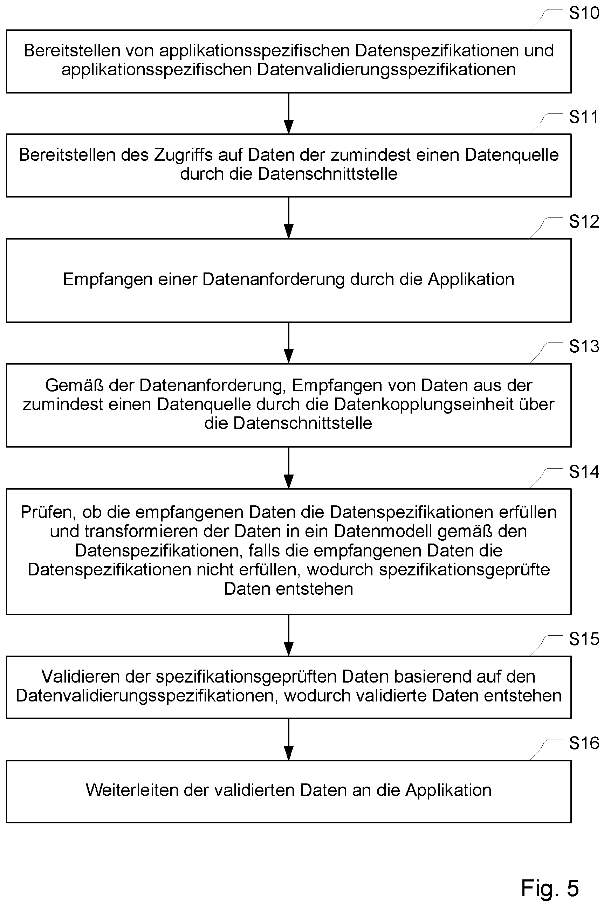

Fig. 5 zeigt ein Blockdiagramm, das die Schritte des Verfahrens zur Bereitstellung von zumindest teilweise strukturierten Daten, die beispielsweise aus mehreren Datenquellen stammen, an eine Applikation mittels eines Datenkopplungssystems 1 verdeutlicht.

Zunächst werden applikationsspezifische Datenspezifikationen und applikationsspezifische Datenvalidierungsspezifikationen bereitgestellt (S10).

Des Weiteren wird ein Zugriff auf Daten zumindest einer Datenquelle durch die Datenschnittstelle bereitgestellt (S11);

Anschließend wird eine Datenanforderung durch das Datenkopplungssystem von der Applikation empfangen (S12).

Gemäß dieser Datenanforderung werden anschließend Daten aus der zumindest einen Datenquelle durch die Datenkopplungseinheit über die Datenschnittstelle empfangen (S13).

Daraufhin wird geprüft, ob die empfangenen Daten die Datenspezifikationen erfüllen. Die Daten werden in ein Datenmodell gemäß den Datenspezifikationen transformiert, falls die empfangenen Daten die Datenspezifikationen nicht erfüllen, wodurch spezifikationsgeprüfte Daten entstehen (S14).

Anschließend werden die spezifikationsgeprüften Daten basierend auf den Datenvalidierungsspezifikationen validiert, wodurch validierte Daten entstehen (S15).

Zuletzt werden die validierten Daten an die Applikation zur Verarbeitung weitergeleitet (S16).

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

### Bezugszeichenliste

- 1: Datenkopplungssystem
- 2: Datenschnittstelle
- 3: Datenkopplungseinheit
- 4: Applikationsschnittstelle
- 5: Datenquelle
- 6: Nutzerschnittstelle
- 7: Funktionsbibliothek

- A: Applikation
- DS: Datenspezifikation
- DVS: Datenvalidierungsspezifikation

## Patentansprüche

1. Computerimplementiertes Verfahren zur Bereitstellung von zumindest teilweise strukturierten Daten an eine Applikation (A) mittels eines Datenkopplungssystems (1), wobei das Datenkopplungssystem (1) eine Datenschnittstelle (2), eine Datenkopplungseinheit (3) und eine Applikationsschnittstelle (4) umfasst, wobei die Datenschnittstelle (2) die Daten von zumindest einer Datenquelle (5) empfängt, wobei die Applikationsschnittstelle (4) eine Schnittstelle zur Bereitstellung von Daten zu der Applikation (A) bildet und wobei das Datenkopplungssystem (1) als universell einsetzbares System dazu eingerichtet ist, zeitgleich oder zeitversetzt mehreren unterschiedlichen Applikationen (A) Daten bereitzustellen, wobei das Verfahren die folgenden Schritte aufweist:
- Bereitstellen von applikationsspezifischen Datenspezifikationen (DS) und applikationsspezifischen Datenvalidierungsspezifikationen (DVS) (S10);
- Bereitstellen des Zugriffs auf Daten der zumindest einen Datenquelle (5) durch die Datenschnittstelle (2) (S11);
- Empfangen einer Datenanforderung durch das Datenkopplungssystem (1) von der Applikation (A) (S12);
- gemäß der Datenanforderung, Empfangen von Daten aus der zumindest einen Datenquelle (5) durch die Datenkopplungseinheit (3) über die Datenschnittstelle (2) (S13);
- Prüfen, ob die empfangenen Daten die Datenspezifikationen (DS) erfüllen und transformieren der Daten in ein Datenmodell gemäß den Datenspezifikationen (DS), falls die empfangenen Daten die Datenspezifikationen (DS) nicht erfüllen, wodurch spezifikationsgeprüfte Daten entstehen (S14);
- Validieren der spezifikationsgeprüften Daten basierend auf den Datenvalidierungsspezifikationen (DVS), wodurch validierte Daten entstehen (S15);
- Weiterleiten der validierten Daten an die Applikation (A) (S16).

2. Verfahren nach Anspruch 1, **dadurch gekennzeichnet, dass** die applikationsspezifischen Datenspezifikationen (DS) eine Definition von mehreren Datensätzen umfassen, die für die Ausführung der jeweiligen Applikation (A) notwendig sind.

3. Verfahren nach Anspruch 1 oder 2, **dadurch gekennzeichnet, dass** die applikationsspezifischen Datenspezifikationen (DS) zumindest ein Datenmodell für die jeweilige Applikation (A) definieren, das Definitionen mehrerer Datensätze aufweist, wobei die Definition eines Datensatzes den Datentyp und das Datenformat zumindest eines Datenelements umfasst.

4. Verfahren nach Anspruch 3, **dadurch gekennzeichnet, dass** einem Datenformat eines Datenelements zumindest eine Datenformatalternative zugeordnet ist, wobei die Datenkopplungseinheit (3) Daten, die die Datenspezifikationen (DS) nicht erfüllen, basierend auf der zumindest einen Datenformatalternative transformiert, um die Datenspezifikationen (DS) zu erfüllen.

5. Verfahren nach einem der vorhergehenden Ansprüche, **dadurch gekennzeichnet, dass** bei einem Abweichen der empfangenen Daten von den applikationsspezifischen Datenspezifikationen (DS) die Datenkopplungseinheit (3) die Daten basierend auf einer oder mehreren Transformationsfunktionen umwandelt.

6. Verfahren nach einem der vorhergehenden Ansprüche, **dadurch gekennzeichnet, dass** die applikationsspezifischen Datenvalidierungsspezifikationen (DVS) mehrere applikationsspezifische Validierungsanforderungen umfassen, die Qualitätsanforderungen angeben, die von den Daten, die der jeweiligen Applikation (A) zuzuführen sind, zu erfüllen sind.

7. Verfahren nach einem der vorhergehenden Ansprüche, **dadurch gekennzeichnet, dass** die Datenkopplungseinheit (3) in einem Initialisierungsmodus und nach dem Beenden des Initialisierungsmodus in einem Produktionsmodus betreibbar ist, wobei in dem Initialisierungsmodus die Daten der zumindest einen Datenquelle (5), die über die Datenschnittstelle (2) verfügbar sind und die den Datenspezifikationen (DS) entsprechen, automatisiert identifiziert werden.

8. Verfahren nach einem der vorhergehenden Ansprüche, **dadurch gekennzeichnet, dass** die Datenkopplungseinheit (3) in einem Initialisierungsmodus und nach dem Beenden des Initialisierungsmodus in einem Produktionsmodus betreibbar ist, wobei die Datenkopplungseinheit (3) solange im Initialisierungsmodus verbleibt, bis sämtliche Daten, die gemäß den applikationsspezifischen Datenspezifikationen (DS) für das Betreiben der jeweiligen Applikation notwendig sind, ermittelt wurden und mittels Datentransformation in ein gemäß den Datenspezifikationen (DS) geeignetes Datenformat transformiert wurden.

9. Verfahren nach einem der vorhergehenden Ansprüche, **dadurch gekennzeichnet, dass** die Datenkopplungseinheit in einem Initialisierungsmodus und nach dem Beenden des Initialisierungsmodus in einem Produktionsmodus betreibbar ist, wobei die Datenkopplungseinheit (3) im Initialisierungsmodus Vorschläge zur Datentransformation unterbreitet, mittels der Daten, die von der Datenschnittstelle (2) bereitgestellt werden und die die Datenspezifikationen (DS) nicht erfüllen, hin zu Daten, die die Datenspezifikationen (DS) erfüllen, transformierbar sind.

10. Verfahren nach einem der vorhergehenden Ansprüche, **dadurch gekennzeichnet, dass** die Datenkopplungseinheit (3) intermittierend oder kontinuierlich prüft, ob die spezifikationsgeprüften Daten die Datenvalidierungsspezifikationen (DVS) erfüllen und eine Statusinformation erzeugt, wenn die spezifikationsgeprüften Daten die Datenvalidierungsspezifikationen (DVS) nicht erfüllen.

11. Verfahren nach einem der vorhergehenden Ansprüche, **dadurch gekennzeichnet, dass** die Datenkopplungseinheit (3) in einem Initialisierungsmodus und nach dem Beenden des Initialisierungsmodus in einem Produktionsmodus betreibbar ist, wobei die Datenkopplungseinheit (3) im Produktionsmodus mittels eines maschinell lernenden Verfahrens oder mittels eines Mustererkennungsverfahrens die von den Datenquellen (5) über die Datenschnittstelle (2) bereitgestellten Daten überwacht, wodurch ein die Veränderung der Daten über der Zeit definierender Wert und/oder ein die Veränderung der Daten über der Zeit definierender Wertebereich erhalten werden und dass eine Meldung ausgegeben wird, wenn eine zeitliche Veränderung der Daten erfasst wird, die von dem Wert und/oder dem Wertebereich abweicht.

12. Verfahren nach einem der vorhergehenden Ansprüche, **dadurch gekennzeichnet, dass** die Datenkopplungseinheit (3) Statusinformationen bezüglich der validierten Daten an die Applikation (A) bereitstellt und die Applikation basierend auf den Statusinformationen eine Fehlermeldung ausgibt oder eine Fehlerbehandlung vollzieht.

13. Verfahren nach einem der vorhergehenden Ansprüche, **dadurch gekennzeichnet, dass** das Datenkopplungssystem eine Nutzerschnittstelle (6) aufweist, über die die applikationsspezifischen Datenspezifikationen (DS) und applikationsspezifischen Datenvalidierungsspezifikationen (DVS) konfigurierbar sind, über die Transformationsfunktionen zur Transformation der Daten auswählbar und/oder konfigurierbar sind und/oder über die Statusinformationen über den aktuellen Zustand des Datenkopplungssystems (1) überprüfbar sind.

14. Computerprogramm, umfassend Befehle, die bei der Ausführung des Programms durch einen Computer diesen veranlassen, das Verfahren nach einem der vorhergehenden Ansprüche auszuführen.

15. Datenkopplungssystem zur Bereitstellung von zumindest teilweise strukturierten Daten an eine Applikation (A), wobei das Datenkopplungssystem (1) eine Datenschnittstelle (2), eine Datenkopplungseinheit (3) und eine Applikationsschnittstelle (4) umfasst, wobei die Datenschnittstelle (2) zum Empfang von Daten von zumindest einer Datenquelle (5) ausgebildet ist, wobei die Applikationsschnittstelle (4) eine Schnittstelle zu der Applikation (A) bildet, wobei das Datenkopplungssystem (1) als universell einsetzbares System dazu eingerichtet ist, zeitgleich oder zeitversetzt mehreren unterschiedlichen Applikationen (A) Daten bereitzustellen, wobei das Datenkopplungssystem (1) dazu konfiguriert ist, die folgenden Schritte zu vollziehen:
- Bereitstellen von applikationsspezifischen Datenspezifikationen (DS) und applikationsspezifischen Datenvalidierungsspezifikationen (DVS);
- Empfangen einer Datenanforderung von der Applikation (A);
- Gemäß der Datenanforderung, Empfangen von Daten aus der zumindest einen Datenquelle (5) durch die Datenkopplungseinheit (3) über die Datenschnittstelle (2);
- Prüfen, ob die empfangenen Daten die Datenspezifikationen (DS) erfüllen und transformieren der Daten in ein Datenmodell gemäß den Datenspezifikationen (DS), falls die empfangenen Daten die Datenspezifikationen (DS) nicht erfüllen, wodurch spezifikationsgeprüfte Daten entstehen;
- Validieren der spezifikationsgeprüften Daten basierend auf den Datenvalidierungsspezifikationen (DVS), wodurch validierte Daten entstehen;
- Weiterleiten der validierten Daten an die Applikation (A).

## Geänderte Patentansprüche

### Geänderte Patentansprüche gemäss Regel 137(2) EPÜ.

1. Computerimplementiertes Verfahren zur Bereitstellung von zumindest teilweise strukturierten Daten an eine Applikation (A) mittels eines Datenkopplungssystems (1), wobei das Datenkopplungssystem (1) eine Datenschnittstelle (2), eine Datenkopplungseinheit (3) und eine Applikationsschnittstelle (4) umfasst, wobei die Datenschnittstelle (2) die Daten von zumindest einer Datenquelle (5) empfängt, wobei die Applikationsschnittstelle (4) eine Schnittstelle zur Bereitstellung von Daten zu der Applikation (A) bildet und wobei das Datenkopplungssystem (1) als universell einsetzbares System dazu eingerichtet ist, zeitgleich oder zeitversetzt mehreren unterschiedlichen Applikationen (A) Daten bereitzustellen, wobei das Verfahren die folgenden Schritte aufweist:
- Bereitstellen von applikationsspezifischen Datenspezifikationen (DS) und applikationsspezifischen Datenvalidierungsspezifikationen (DVS) (S10);
- Bereitstellen des Zugriffs auf Daten der zumindest einen Datenquelle (5) durch die Datenschnittstelle (2) (S11);
- Empfangen einer Datenanforderung durch das Datenkopplungssystem (1) von der Applikation (A) (S12);
- gemäß der Datenanforderung, Empfangen von Daten aus der zumindest einen Datenquelle (5) durch die Datenkopplungseinheit (3) über die Datenschnittstelle (2) (S13);
- Prüfen, ob die empfangenen Daten die Datenspezifikationen (DS) erfüllen und transformieren der Daten durch die Datenkopplungseinheit (3) in ein Datenmodell gemäß den Datenspezifikationen (DS), falls die empfangenen Daten die Datenspezifikationen (DS) nicht erfüllen, wodurch spezifikationsgeprüfte Daten entstehen (S14);
- Validieren der spezifikationsgeprüften Daten basierend auf den Datenvalidierungsspezifikationen (DVS), wodurch validierte Daten entstehen (S15);
- Weiterleiten der validierten Daten an die Applikation (A) (S16);
wobei die applikationsspezifischen Datenspezifikationen (DS) zumindest ein Datenmodell für die jeweilige Applikation (A) definieren, das Definitionen mehrerer Datensätze aufweist, wobei die Definition eines Datensatzes den Datentyp und das Datenformat zumindest eines Datenelements umfasst und wobei einem Datenformat eines Datenelements zumindest eine Datenformatalternative zugeordnet ist, wobei die Datenkopplungseinheit (3) Daten, die die Datenspezifikationen (DS) nicht erfüllen, basierend auf der zumindest einen Datenformatalternative transformiert, um die Datenspezifikationen (DS) zu erfüllen.

2. Verfahren nach Anspruch 1, **dadurch gekennzeichnet, dass** die applikationsspezifischen Datenspezifikationen (DS) eine Definition von mehreren Datensätzen umfassen, die für die Ausführung der jeweiligen Applikation (A) notwendig sind.

3. Verfahren nach einem der vorhergehenden Ansprüche, **dadurch gekennzeichnet, dass** bei einem Abweichen der empfangenen Daten von den applikationsspezifischen Datenspezifikationen (DS) die Datenkopplungseinheit (3) die Daten basierend auf einer oder mehreren Transformationsfunktionen umwandelt.

4. Verfahren nach einem der vorhergehenden Ansprüche, **dadurch gekennzeichnet, dass** die applikationsspezifischen Datenvalidierungsspezifikationen (DVS) mehrere applikationsspezifische Validierungsanforderungen umfassen, die Qualitätsanforderungen angeben, die von den Daten, die der jeweiligen Applikation (A) zuzuführen sind, zu erfüllen sind.

5. Verfahren nach einem der vorhergehenden Ansprüche, **dadurch gekennzeichnet, dass** die Datenkopplungseinheit (3) in einem Initialisierungsmodus und nach dem Beenden des Initialisierungsmodus in einem Produktionsmodus betreibbar ist, wobei in dem Initialisierungsmodus die Daten der zumindest einen Datenquelle (5), die über die Datenschnittstelle (2) verfügbar sind und die den Datenspezifikationen (DS) entsprechen, automatisiert identifiziert werden.

6. Verfahren nach einem der vorhergehenden Ansprüche, **dadurch gekennzeichnet, dass** die Datenkopplungseinheit (3) in einem Initialisierungsmodus und nach dem Beenden des Initialisierungsmodus in einem Produktionsmodus betreibbar ist, wobei die Datenkopplungseinheit (3) solange im Initialisierungsmodus verbleibt, bis sämtliche Daten, die gemäß den applikationsspezifischen Datenspezifikationen (DS) für das Betreiben der jeweiligen Applikation notwendig sind, ermittelt wurden und mittels Datentransformation in ein gemäß den Datenspezifikationen (DS) geeignetes Datenformat transformiert wurden.

7. Verfahren nach einem der vorhergehenden Ansprüche, **dadurch gekennzeichnet, dass** die Datenkopplungseinheit in einem Initialisierungsmodus und nach dem Beenden des Initialisierungsmodus in einem Produktionsmodus betreibbar ist, wobei die Datenkopplungseinheit (3) im Initialisierungsmodus Vorschläge zur Datentransformation unterbreitet, mittels der Daten, die von der Datenschnittstelle (2) bereitgestellt werden und die die Datenspezifikationen (DS) nicht erfüllen, hin zu Daten, die die Datenspezifikationen (DS) erfüllen, transformierbar sind.

8. Verfahren nach einem der vorhergehenden Ansprüche, **dadurch gekennzeichnet, dass** die Datenkopplungseinheit (3) intermittierend oder kontinuierlich prüft, ob die spezifikationsgeprüften Daten die Datenvalidierungsspezifikationen (DVS) erfüllen und eine Statusinformation erzeugt, wenn die spezifikationsgeprüften Daten die Datenvalidierungsspezifikationen (DVS) nicht erfüllen.

9. Verfahren nach einem der vorhergehenden Ansprüche, **dadurch gekennzeichnet, dass** die Datenkopplungseinheit (3) in einem Initialisierungsmodus und nach dem Beenden des Initialisierungsmodus in einem Produktionsmodus betreibbar ist, wobei die Datenkopplungseinheit (3) im Produktionsmodus mittels eines maschinell lernenden Verfahrens oder mittels eines Mustererkennungsverfahrens die von den Datenquellen (5) über die Datenschnittstelle (2) bereitgestellten Daten überwacht, wodurch ein die Veränderung der Daten über der Zeit definierender Wert und/oder ein die Veränderung der Daten über der Zeit definierender Wertebereich erhalten werden und dass eine Meldung ausgegeben wird, wenn eine zeitliche Veränderung der Daten erfasst wird, die von dem Wert und/oder dem Wertebereich abweicht.

10. Verfahren nach einem der vorhergehenden Ansprüche, **dadurch gekennzeichnet, dass** die Datenkopplungseinheit (3) Statusinformationen bezüglich der validierten Daten an die Applikation (A) bereitstellt und die Applikation basierend auf den Statusinformationen eine Fehlermeldung ausgibt oder eine Fehlerbehandlung vollzieht.

11. Verfahren nach einem der vorhergehenden Ansprüche, **dadurch gekennzeichnet, dass** das Datenkopplungssystem eine Nutzerschnittstelle (6) aufweist, über die die applikationsspezifischen Datenspezifikationen (DS) und applikationsspezifischen Datenvalidierungsspezifikationen (DVS) konfigurierbar sind, über die Transformationsfunktionen zur Transformation der Daten auswählbar und/oder konfigurierbar sind und/oder über die Statusinformationen über den aktuellen Zustand des Datenkopplungssystems (1) überprüfbar sind.

12. Computerprogramm, umfassend Befehle, die bei der Ausführung des Programms durch einen Computer diesen veranlassen, das Verfahren nach einem der vorhergehenden Ansprüche auszuführen.

13. Datenkopplungssystem zur Bereitstellung von zumindest teilweise strukturierten Daten an eine Applikation (A), wobei das Datenkopplungssystem (1) eine Datenschnittstelle (2), eine Datenkopplungseinheit (3) und eine Applikationsschnittstelle (4) umfasst, wobei die Datenschnittstelle (2) zum Empfang von Daten von zumindest einer Datenquelle (5) ausgebildet ist, wobei die Applikationsschnittstelle (4) eine Schnittstelle zu der Applikation (A) bildet, wobei das Datenkopplungssystem (1) als universell einsetzbares System dazu eingerichtet ist, zeitgleich oder zeitversetzt mehreren unterschiedlichen Applikationen (A) Daten bereitzustellen, wobei das Datenkopplungssystem (1) dazu konfiguriert ist, die folgenden Schritte zu vollziehen:
- Bereitstellen von applikationsspezifischen Datenspezifikationen (DS) und applikationsspezifischen Datenvalidierungsspezifikationen (DVS);
- Empfangen einer Datenanforderung von der Applikation (A);
- Gemäß der Datenanforderung, Empfangen von Daten aus der zumindest einen Datenquelle (5) durch die Datenkopplungseinheit (3) über die Datenschnittstelle (2);
- Prüfen, ob die empfangenen Daten die Datenspezifikationen (DS) erfüllen und transformieren der Daten durch die Datenkopplungseinheit (3) in ein Datenmodell gemäß den Datenspezifikationen (DS), falls die empfangenen Daten die Datenspezifikationen (DS) nicht erfüllen, wodurch spezifikationsgeprüfte Daten entstehen;
- Validieren der spezifikationsgeprüften Daten basierend auf den Datenvalidierungsspezifikationen (DVS), wodurch validierte Daten entstehen;
- Weiterleiten der validierten Daten an die Applikation (A);
wobei die applikationsspezifischen Datenspezifikationen (DS) zumindest ein Datenmodell für die jeweilige Applikation (A) definieren, das Definitionen mehrerer Datensätze aufweist, wobei die Definition eines Datensatzes den Datentyp und das Datenformat zumindest eines Datenelements umfasst und wobei einem Datenformat eines Datenelements zumindest eine Datenformatalternative zugeordnet ist, wobei die Datenkopplungseinheit (3) Daten, die die Datenspezifikationen (DS) nicht erfüllen, basierend auf der zumindest einen Datenformatalternative transformiert, um die Datenspezifikationen (DS) zu erfüllen.
